# EUROPEAN PATENT APPLICATION

(11) **EP 4 618 376 A1**
(43) Date of publication of application: **17.09.2025**
(21) Application number: 23888867.1
(22) Date of filing: 09.08.2023
(51) Int. Cl.: H02J 50/80, H04L 1/12, H02J 50/60, H02J 50/12, H02J 50/40

(54) **METHOD AND DEVICE FOR CONTROLLING POWER FOR FAST CHARGING IN WIRELESS POWER TRANSMISSION SYSTEM**

(30) Priority: 10.11.2022 KR 20220149931; 29.11.2022 KR 20220163108
(71) Applicant: LG Electronics Inc., Yeongdeungpo-gu Seoul 07336 (KR)
(72) Inventor: YOUN, Jinho, Seoul 06772 (KR)
(74) Representative: Frenkel, Matthias Alexander
(86) International application number: PCT/KR2023/011736
(87) International publication number: WO 2024/101600

(57) **Abstract**

The present specification relates to a method for controlling power for fast charging in a wireless power transmission system, in which, in the transfer phase, a wireless power receiver receives a power information packet from a wireless power transmitter. The wireless power receiver transmits a response message to the power information packet to the wireless power transmitter. If the wireless power receiver does not satisfy a required value for power information of the wireless power transmitter, the response message includes DSR/NAK and the reason for DSR/NAK. Power is controlled on the basis of the reason for DSR/NAK.

## Description

### TECHNICAL FIELD

This specification relates to wireless power transfer.

### BACKGROUND ART

The wireless power transfer (or transmission) technology corresponds to a technology that may wirelessly transfer (or transmit) power between a power source and an electronic device. For example, by allowing the battery of a wireless device, such as a smartphone or a tablet PC, and so on, to be recharged by simply loading the wireless device on a wireless charging pad, the wireless power transfer technique may provide more outstanding mobility, convenience, and safety as compared to the conventional wired charging environment, which uses a wired charging connector. Apart from the wireless charging of wireless devices, the wireless power transfer technique is raising attention as a replacement for the conventional wired power transfer environment in diverse fields, such as electric vehicles, Bluetooth earphones, 3D glasses, diverse wearable devices, household (or home) electric appliances, furniture, underground facilities, buildings, medical equipment, robots, leisure, and so on.

The wireless power transfer (or transmission) method is also referred to as a contactless power transfer method, or a no point of contact power transfer method, or a wireless charging method. A wireless power transfer system may be configured of a wireless power transmitter supplying electric energy by using a wireless power transfer method, and a wireless power receiver receiving the electric energy being supplied by the wireless power transmitter and supplying the receiving electric energy to a receiver, such as a battery cell, and so on.

The wireless power transfer technique includes diverse methods, such as a method of transferring power by using magnetic coupling, a method of transferring power by using radio frequency (RF), a method of transferring power by using microwaves, and a method of transferring power by using ultrasound (or ultrasonic waves). The method that is based on magnetic coupling is categorized as a magnetic induction method and a magnetic resonance method. The magnetic induction method corresponds to a method transmitting power by using electric currents that are induced to the coil of the receiver by a magnetic field, which is generated from a coil battery cell of the transmitter, in accordance with an electromagnetic coupling between a transmitting coil and a receiving coil. The magnetic resonance method is similar to the magnetic induction method in that is uses a magnetic field. However, the magnetic resonance method is different from the magnetic induction method in that energy is transmitted due to a concentration of magnetic fields on both a transmitting end and a receiving end, which is caused by the generated resonance.

### DISCLOSURE

### TECHNICAL SOLUTION

According to one embodiment of the present specification, a wireless power receiver transmits a Configuration (CFG) packet to a wireless power transmitter in a configuration phase.

The wireless power receiver enters a negotiation phase with the wireless power transmitter based on the CFG packet.

The wireless power receiver enters a power transfer phase by performing genuine authentication and negotiation with the wireless power transmitter in the negotiation phase.

In the power transfer phase, the power control method of the wireless power transmitter for fast charging is as follows.

The wireless power receiver receives a power information packet from the wireless power transmitter. The wireless power receiver transmits a response message to the power information packet to the wireless power transmitter.

The response message includes a Data Stream Response (DSR)/ Not Acknowledge (NAK) and a reason for the DSR/NAK based on power information of the wireless power transmitter not satisfying a required value. For example, if the power information packet includes a voltage value of the wireless power transmitter, the wireless power receiver determines whether a vrect value is appropriate for fast charging based on the voltage value of the wireless power transmitter, and if not, notifies the wireless power transmitter of DSR/NAK and the reason.

The reason for the DSR/NAK may include information on that a vrect value of the wireless power receiver is lower than the required value due to the voltage value of the wireless power transmitter.

The wireless power transmitter may perform power control based on the reason for the DSR/NAK. Since the wireless power transmitter has received the DSR/NAK and the reason for the DSR/NAK for the power information packet including the voltage value of the wireless power transmitter, the wireless power transmitter may perform the power control to increase its voltage value as much as necessary for fast charging.

The present embodiment proposes a method for power control and power transmission by a wireless power transmitter during fast charging and normal charging. Accordingly, the wireless power transmitter may perform the power control after checking a status of the wireless power receiver before directly performing the power control and the power transmission. In the past, there was a limitation that the power of the wireless power receiver had to be received, but through this embodiment, there is an effect that stable power transmission or wireless charging is possible by checking the status of the wireless power receiver in the middle while the wireless power transmitter directly performs the power control.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

### BRIEF DESCRIPTION OF THE DRAWINGS

FIG. 1 is a block diagram of a wireless power system (10) according to an exemplary embodiment of the present disclosure.
FIG. 2 is a block diagram of a wireless power system (10) according to another exemplary embodiment of the present disclosure.
FIG. 3 shows an exemplary embodiment of diverse electronic devices adopting a wireless power transfer system.
FIG. 4 is a block diagram of a wireless power transmission system according to one embodiment.
FIG. 5 is a diagram illustrating an example of a Bluetooth communication architecture to which an embodiment according to the present disclosure may be applied.
FIG. 6 is a block diagram illustrating a wireless power transfer system using BLE communication according to an example.
FIG. 7 is a block diagram illustrating a wireless power transfer system using BLE communication according to another example.
FIG. 8 is a state transition diagram for explaining the wireless power transfer procedure.
FIG. 9 schematically shows an example of the protocol of the ping phase 810.
FIG. 10 schematically shows an example of the protocol of the configuration phase 820.
FIG. 11 is a diagram illustrating a message field of a configuration packet (CFG) of a wireless power reception device according to an embodiment.
FIG. 12 is a flowchart schematically illustrating a protocol of a negotiation stage or a renegotiation stage according to an embodiment.
FIG. 13 is a diagram illustrating a message field of a capability packet (CAP) of a wireless power transmission device according to an embodiment.
FIG. 14 schematically shows a flow chart of the data flow for the power transfer phase 840 in the baseline protocol.
FIG. 15 schematically shows a flow chart of the data flow for the power transfer phase 840 in the extended protocol.
FIG. 16 illustrates an application-level data stream between the wireless power transmitter 100 and the wireless power receiver 200 according to an example.
FIG. 17 shows a power control method according to one embodiment.
FIG. 18 schematically shows the structure of an MPP ID packet.
FIG. 19 schematically shows an example of an XID packet in MPP.
FIG. 20 schematically shows the protocol in MPP restricted mode.
FIGS. 21 and 22 schematically show the protocol in MPP full mode.
FIG. 23 illustrates an example of an authentication message header.
FIG. 24 illustrates an example of an authentication protocol version field.
FIG. 25 illustrates an example of a message type field for an authentication request.
FIG. 26 illustrates an example of a message type field for an authentication response.
FIG. 27 illustrates an example of GET_DIGESTS.
FIG. 28 illustrates an example of GET_CERTIFICATE.
FIG. 29 illustrates an example of CHALLENGE.
FIG. 30 illustrates an example of DIGESTS.
FIG. 31 illustrates an example of CERTIFICATE.
FIG. 32 illustrates an example of CHALLENGE_AUTH.
FIG. 33 illustrates an example of ERROR.
FIG. 34 is a flowchart of a method for transferring wireless power according to one embodiment of the present disclosure.
FIG. 35 is a diagram showing a Direct Charger section and a Master Charger section according to voltage and current.
FIG. 36 shows an operation protocol according to EPP.
FIG. 37 shows a Power Profile according to the present embodiment.
FIG. 38 shows an example of a Power Profile for fast charging.
FIG. 39 shows another example of a Power Profile for fast charging.
FIG. 40 shows an example of setting power transmission and power control authority to PTx or PRx.
FIG. 41 shows an example of PTx performing power transmission and power control.
FIG. 42 shows an example of PTx performing power transmission and power control.
FIG. 43 shows an example of PTx performing power transmission and power control.
FIG. 44 shows an example of providing PTx information upon request of PRx.
FIG. 45 shows an example of providing PRx information upon request of PTx.
FIG. 46 is a flowchart of a method for performing power control for high-speed charging from a wireless power transmitter perspective according to an embodiment of the present specification.
FIG. 47 is a flowchart of a method for performing power control for high-speed charging from a wireless power receiver perspective according to an embodiment of the present specification.

### MODE FOR INVENTION

In this specification, "A or B" may refer to "only A", "only B" or "both A and B". In other words, "A or B" in this specification may be interpreted as "A and/or B". For example, in this specification, "A, B, or C" may refer to "only A", "only B", "only C", or any combination of "A, B and C".

The slash (/) or comma used in this specification may refer to "and/or". For example, "A/B" may refer to "A and/or B". Accordingly, "A/B" may refer to "only A", "only B", or "both A and B". For example, "A, B, C" may refer to "A, B, or C".

In this specification, "at least one of A and B" may refer to "only A", "only B", or "both A and B". In addition, in this specification, the expression of "at least one of A or B" or "at least one of A and/or B" may be interpreted to be the same as "at least one of A and B".

Also, in this specification, "at least one of A, B and C" may refer to "only A", "only B", "only C", or "any combination of A, Band C". Also, "at least one of A, B or C" or "at least one of A, B and/or C" may refer to "at least one of A, B and C".

In addition, parentheses used in the present specification may refer to "for example". Specifically, when indicated as "control information (PDCCH)", "PDCCH" may be proposed as an example of "control information". In other words, "control information" in this specification is not limited to "PDCCH", and "PDCCH" may be proposed as an example of "control information". In addition, even when indicated as "control information (i.e., PDCCH)", "PDCCH" may be proposed as an example of "control information".

In the present specification, technical features that are individually described in one drawing may be individually or simultaneously implemented. The term "wireless power", which will hereinafter be used in this specification, will be used to refer to an arbitrary form of energy that is related to an electric field, a magnetic field, and an electromagnetic field, which is transferred (or transmitted) from a wireless power transmitter to a wireless power receiver without using any physical electromagnetic conductors. The wireless power may also be referred to as a wireless power signal, and this may refer to an oscillating magnetic flux that is enclosed by a primary coil and a secondary coil. For example, power conversion for wirelessly charging devices including mobile phones, cordless phones, iPods, MP3 players, headsets, and so on, within the system will be described in this specification. Generally, the basic principle of the wireless power transfer technique includes, for example, all of a method of transferring power by using magnetic coupling, a method of transferring power by using radio frequency (RF), a method of transferring power by using microwaves, and a method of transferring power by using ultrasound (or ultrasonic waves).

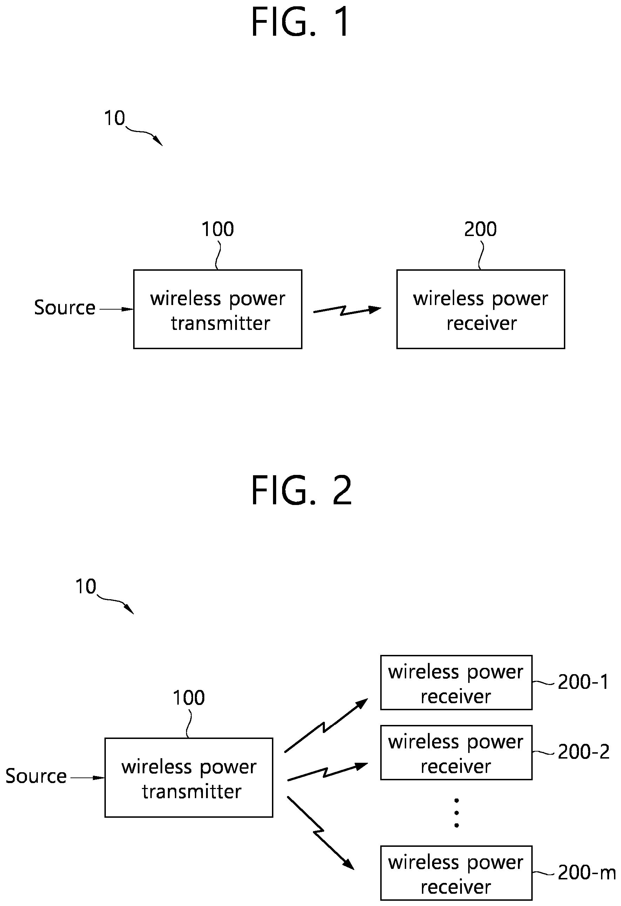

FIG. 1 is a block diagram of a wireless power system (10) according to an exemplary embodiment of the present disclosure.

Referring to FIG. 1, the wireless power system (10) include a wireless power transmitter (100) and a wireless power receiver (200).

The wireless power transmitter (100) is supplied with power from an external power source (S) and generates a magnetic field. The wireless power receiver (200) generates electric currents by using the generated magnetic field, thereby being capable of wirelessly receiving power.

Additionally, in the wireless power system (10), the wireless power transmitter (100) and the wireless power receiver (200) may transceive (transmit and/or receive) diverse information that is required for the wireless power transfer. Herein, communication between the wireless power transmitter (100) and the wireless power receiver (200) may be performed (or established) in accordance with any one of an in-band communication, which uses a magnetic field that is used for the wireless power transfer (or transmission), and an out-band communication, which uses a separate communication carrier. Out-band communication may also be referred to as out-of-band communication. Hereinafter, out-band communication will be largely described. Examples of out-band communication may include NFC, Bluetooth, Bluetooth low energy (BLE), and the like.

Herein, the wireless power transmitter (100) may be provided as a fixed type or a mobile (or portable) type. Examples of the fixed transmitter type may include an embedded type, which is embedded in in-door ceilings or wall surfaces or embedded in furniture, such as tables, an implanted type, which is installed in out-door parking lots, bus stops, subway stations, and so on, or being installed in means of transportation, such as vehicles or trains. The mobile (or portable) type wireless power transmitter (100) may be implemented as a part of another device, such as a mobile device having a portable size or weight or a cover of a laptop computer, and so on.

Additionally, the wireless power receiver (200) should be interpreted as a comprehensive concept including diverse home appliances and devices that are operated by being wirelessly supplied with power instead of diverse electronic devices being equipped with a battery and a power cable. Typical examples of the wireless power receiver (200) may include portable terminals, cellular phones, smartphones, personal digital assistants (PDAs), portable media players (PDPs), Wibro terminals, tablet PCs, phablet, laptop computers, digital cameras, navigation terminals, television, electronic vehicles (EVs), and so on.

FIG. 2 is a block diagram of a wireless power system (10) according to another exemplary embodiment of the present disclosure.

Referring to FIG. 2, in the wireless power system (10), one wireless power receiver (200) or a plurality of wireless power receivers may exist. Although it is shown in FIG. 1 that the wireless power transmitter (100) and the wireless power receiver (200) send and receive power to and from one another in a one-to-one correspondence (or relationship), as shown in FIG. 2, it is also possible for one wireless power transmitter (100) to simultaneously transfer power to multiple wireless power receivers (200-1, 200-2, ..., 200-M). Most particularly, in case the wireless power transfer (or transmission) is performed by using a magnetic resonance method, one wireless power transmitter (100) may transfer power to multiple wireless power receivers (200-1, 200-2, ..., 200-M) by using a synchronized transport (or transfer) method or a time-division transport (or transfer) method.

Additionally, although it is shown in FIG. 1 that the wireless power transmitter (100) directly transfers (or transmits) power to the wireless power receiver (200), the wireless power system (10) may also be equipped with a separate wireless power transceiver, such as a relay or repeater, for increasing a wireless power transport distance between the wireless power transmitter (100) and the wireless power receiver (200). In this case, power is delivered to the wireless power transceiver from the wireless power transmitter (100), and, then, the wireless power transceiver may transfer the received power to the wireless power receiver (200).

Hereinafter, the terms wireless power receiver, power receiver, and receiver, which are mentioned in this specification, will refer to the wireless power receiver (200). Also, the terms wireless power transmitter, power transmitter, and transmitter, which are mentioned in this specification, will refer to the wireless power transmitter (100).

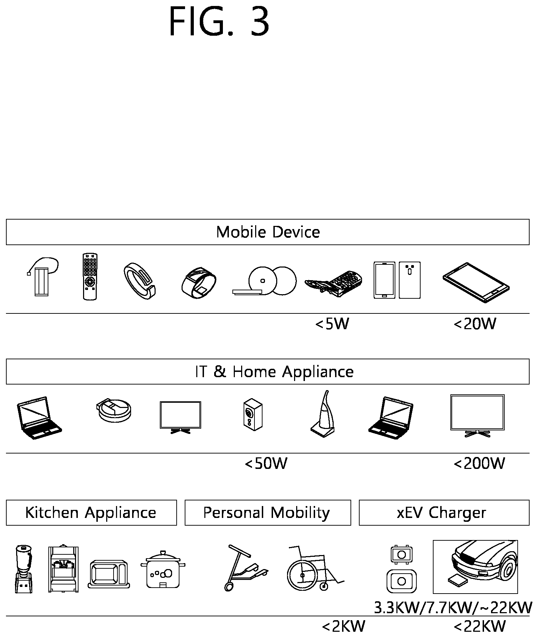

FIG. 3 shows an exemplary embodiment of diverse electronic devices adopting a wireless power transfer system.

As shown in FIG. 3, the electronic devices included in the wireless power transfer system are sorted in accordance with the amount of transmitted power and the amount of received power. Referring to FIG. 3, wearable devices, such as smart watches, smart glasses, head mounted displays (HMDs), smart rings, and so on, and mobile electronic devices (or portable electronic devices), such as earphones, remote controllers, smartphones, PDAs, tablet PCs, and so on, may adopt a low-power (approximately 5W or less or approximately 20W or less) wireless charging method.

Small-sized/Mid-sized electronic devices, such as laptop computers, robot vacuum cleaners, TV receivers, audio devices, vacuum cleaners, monitors, and so on, may adopt a mid-power (approximately 50W or less or approximately 200W or less) wireless charging method. Kitchen appliances, such as mixers, microwave ovens, electric rice cookers, and so on, and personal transportation devices (or other electric devices or means of transportation), such as powered wheelchairs, powered kick scooters, powered bicycles, electric cars, and so on may adopt a high-power (approximately 2kW or less or approximately 22kW or less) wireless charging method.

The electric devices or means of transportation, which are described above (or shown in FIG. 1) may each include a wireless power receiver, which will hereinafter be described in detail. Therefore, the above-described electric devices or means of transportation may be charged (or re-charged) by wirelessly receiving power from a wireless power transmitter.

Hereinafter, although the present disclosure will be described based on a mobile device adopting the wireless power charging method, this is merely exemplary. And, therefore, it shall be understood that the wireless charging method according to the present disclosure may be applied to diverse electronic devices.

A standard for the wireless power transfer (or transmission) includes a wireless power consortium (WPC), an air fuel alliance (AFA), and a power matters alliance (PMA).

WPC consists of Qi ecosystem for mobile and wearable devices and HI ecosystem for kitchen appliances, robots, LEV (light electric vehicle). Various wireless power transmitters and receivers using different power levels are covered by standards within each ecosystem and can be classified into different power classes or categories.

The Qi standard (belong to Qi ecosystem) defines the baseline power profile (BPP), the extended power profile (EPP), and the magnetic power profile. BPP is for wireless power transmitters and receivers supporting power transfer of 5W, while EPP and MPP are for wireless power transmitters and receivers supporting power transfer in the range of more than 5W and less than 15W. In-band (IB) communication is a mandatory communication protocol of the Qi spec, but out-band (OB) communication, which is used as an optional backup channel, can also be used. The wireless power receiver can identify whether it supports OB by setting the OB flag in the configuration packet. The wireless power transmitter supporting OB can enter the OB handover phase by transmitting a bit-pattern for OB handover as a response to the configuration packet. The response to the configuration packet can be NAK, ND, or a newly defined 8-bit pattern. Applications of the Qi spec include smartphones.

The IND standard (belong to HI ecosystem) is for wireless power transmitters and receivers providing guaranteed power of 30 W to 150 W. IB and OB communication channels can be used for mutual information exchange and power control. Applications of the IND spec include robots and power tools.

The LEV standard (belong to HI ecosystem) is for wireless power transmitters and receivers that provide guaranteed power of 100W to 500W. IB is an essential communication channel for LEV spec, and OB communication can also be used. IB can be used as initialization and link establishment to OB. The wireless power transmitter can enter the OB handover phase using the bit pattern for OB handover as a response to the configuration packet.

The Ki standard (belong to HI ecosystem) is for wireless power transmitters and receivers that provide guaranteed power of 200W to 2kW, and essentially uses OB communication channels such as NFC or BLE. Its applications include kitchen appliances.

Wireless power transmitters and receivers may provide a very convenient user experience and interface (UX/UI). That is, a smart wireless charging service may be provided, and the smart wireless charging service may be implemented based on a UX/UI of a smartphone including a wireless power transmitter. For these applications, an interface between a processor of a smartphone and a wireless charging receiver allows for "drop and play" two-way communication between the wireless power transmitter and the wireless power receiver.

As an example, a user can experience a smart wireless charging service in a hotel. When a user enters a hotel room and places the smartphone on the wireless charger in the room, the wireless charger transmits wireless power to the smartphone, and the smartphone receives wireless power. In this process, the wireless charger transmits information about the smart wireless charging service to the smartphone. When the smartphone detects that it is placed on the wireless charger, detects reception of wireless power, or when the smartphone receives information about the smart wireless charging service from the wireless charger, the smartphone enters a state where it asks the user for consent (opt-in) to additional features. To this end, the smartphone can display a message on the screen with or without an alarm sound. An example of a message may include phrases such as "Welcome to ### hotel. Select "Yes" to activate smart charging functions: Yes | No Thanks." The smartphone receives the user's input of selecting Yes or No Thanks and performs the next procedure selected by the user. If Yes is selected, the smartphone transmits the information to the wireless charger. And the smartphone and wireless charger perform the smart charging function together.

Smart wireless charging service may also include receiving auto-filled WiFi credentials. For example, a wireless charger transmits WiFi credentials to a smartphone, and the smartphone runs the appropriate app and automatically enters the WiFi credentials received from the wireless charger.

Smart wireless charging service may also include running a hotel application that provides hotel promotions, remote check-in/check-out, and obtaining contact information.

As another example, users can experience smart wireless charging services within a vehicle. When the user gets into the vehicle and places the smartphone on the wireless charger, the wireless charger transmits wireless power to the smartphone, and the smartphone receives wireless power. In this process, the wireless charger transmits information about the smart wireless charging service to the smartphone. When the smartphone detects that it is placed on the wireless charger, detects reception of wireless power, or when the smartphone receives information about the smart wireless charging service from the wireless charger, the smartphone enters a state where it asks the user to confirm his or her identity.

In this state, the smartphone automatically connects to the car via WiFi and/or Bluetooth. The smartphone can display the message on the screen with or without an alarm sound. An example of a message may include phrases such as "Welcome to your car. Select "Yes" to synch device with in-car controls: Yes | No Thanks." The smartphone receives the user's input of selecting Yes or No Thanks and performs the next procedure selected by the user. If Yes is selected, the smartphone transmits the information to the wireless charger. And by running the in-vehicle application/display software, the smartphone and wireless charger can perform in-vehicle smart control functions together. Users can enjoy the music they want and check regular map locations. In-vehicle application/display software may include the capability to provide synchronized access for pedestrians.

As another example, users can experience smart wireless charging at home. When a user enters a room and places the smartphone on the wireless charger in the room, the wireless charger transmits wireless power to the smartphone, and the smartphone receives wireless power. In this process, the wireless charger transmits information about the smart wireless charging service to the smartphone. When the smartphone detects that it is placed on the wireless charger, detects reception of wireless power, or when the smartphone receives information about the smart wireless charging service from the wireless charger, the smartphone enters a state where it asks the user for consent (opt-in) to additional features. To this end, the smartphone can display a message on the screen with or without an alarm sound. An example of a message may include phrases such as "Hi xxx, Would you like to activate night mode and secure the building?: Yes | No Thanks." The smartphone receives the user's input of selecting Yes or No Thanks and performs the next procedure selected by the user. If Yes is selected, the smartphone transmits the information to the wireless charger. Smartphones and wireless chargers can at least recognize user patterns and encourage users to lock doors and windows, turn off lights, or set alarms.

Hereinafter, 'profiles' will be newly defined based on indexes/reference standards representing/indicating the compatibility. More specifically, it may be understood that by maintaining compatibility between wireless power transmitters and receivers having the same 'profile', stable power transfer/reception may be performed, and that power transfer/reception between wireless power transmitters and receivers having different 'profiles' cannot be performed. The 'profiles' may be defined in accordance with whether or not compatibility is possible and/or the application regardless of (or independent from) the power class.

For example, the profile may be sorted into 3 different categories, such as i) Mobile, ii) Power tool and iii) Kitchen.

For another example, the profile may be sorted into 4 different categories, such as i) Mobile, ii) Power tool, iii) Kitchen, and iv) Wearable.

In case of the 'Mobile' profile, the PC may be defined as PC0 and/or PC1, the communication protocol/method may be defined as IB and OB communication, and the operation frequency may be defined as 87 to 205kHz, and smartphones, laptop computers, and so on, may exist as the exemplary application.

In case of the 'Power tool' profile, the PC may be defined as PC1, the communication protocol/method may be defined as IB communication, and the operation frequency may be defined as 87 to 145kHz, and power tools, and so on, may exist as the exemplary application.

In case of the 'Kitchen' profile, the PC may be defined as PC2, the communication protocol/method may be defined as NFC-based communication, and the operation frequency may be defined as less than 100kHz, and kitchen/home appliances, and so on, may exist as the exemplary application.

In the case of power tools and kitchen profiles, NFC communication may be used between the wireless power transmitter and the wireless power receiver. The wireless power transmitter and the wireless power receiver may confirm that they are NFC devices with each other by exchanging WPC NFC data exchange profile format (NDEF).

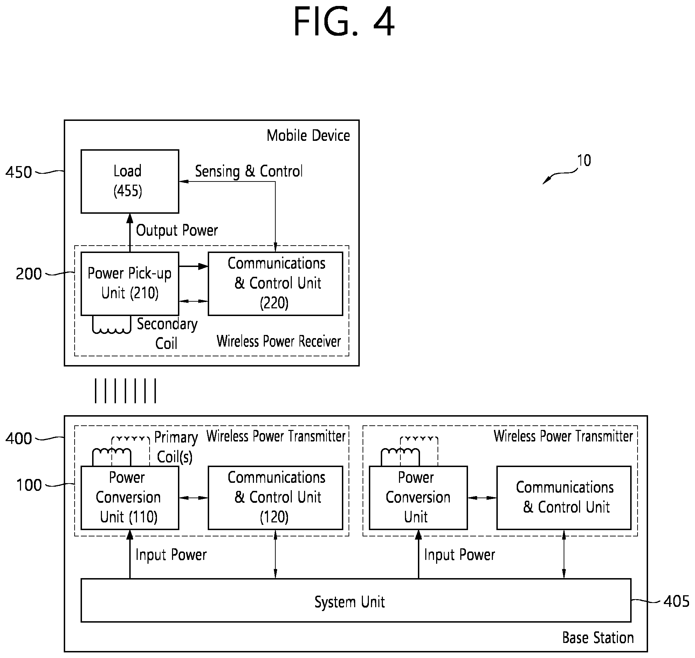

FIG. 4 is a block diagram of a wireless power transmission system according to one embodiment.

Referring to FIG. 4, the wireless power transfer system (10) includes a mobile device (450), which wirelessly receives power, and a base station (400), which wirelessly transmits power.

As a device providing induction power or resonance power, the base station (400) may include at least one of a wireless power transmitter (100) and a system unit (405). The wireless power transmitter (100) may transmit induction power or resonance power and may control the transmission. The wireless power transmitter (100) may include a power conversion unit (110) converting electric energy to a power signal by generating a magnetic field through a primary coil (or primary coils), and a communications & control unit (120) controlling the communication and power transfer between the wireless power receiver (200) in order to transfer power at an appropriate (or suitable) level. The system unit (405) may perform input power provisioning, controlling of multiple wireless power transmitters, and other operation controls of the base station (400), such as user interface control.

The primary coil may generate an electromagnetic field by using an alternating current power (or voltage or current). The primary coil is supplied with an alternating current power (or voltage or current) of a specific frequency, which is being outputted from the power conversion unit (110). And, accordingly, the primary coil may generate a magnetic field of the specific frequency. The magnetic field may be generated in a non-radial shape or a radial shape. And, the wireless power receiver (200) receives the generated magnetic field and then generates an electric current. In other words, the primary coil wirelessly transmits power.

In the magnetic induction method, a primary coil and a secondary coil may have randomly appropriate shapes. For example, the primary coil and the secondary coil may correspond to copper wire being wound around a high-permeability formation, such as ferrite or a non-crystalline metal. The primary coil may also be referred to as a transmitting coil, a primary core, a primary winding, a primary loop antenna, and so on. Meanwhile, the secondary coil may also be referred to as a receiving coil, a secondary core, a secondary winding, a secondary loop antenna, a pickup antenna, and so on.

In case of using the magnetic resonance method, the primary coil and the secondary coil may each be provided in the form of a primary resonance antenna and a secondary resonance antenna. The resonance antenna may have a resonance structure including a coil and a capacitor. At this point, the resonance frequency of the resonance antenna may be determined by the inductance of the coil and a capacitance of the capacitor. Herein, the coil may be formed to have a loop shape. And, a core may be placed inside the loop. The core may include a physical core, such as a ferrite core, or an air core.

The energy transmission (or transfer) between the primary resonance antenna and the second resonance antenna may be performed by a resonance phenomenon occurring in the magnetic field. When a near field corresponding to a resonance frequency occurs in a resonance antenna, and in case another resonance antenna exists near the corresponding resonance antenna, the resonance phenomenon refers to a highly efficient energy transfer occurring between the two resonance antennas that are coupled with one another. When a magnetic field corresponding to the resonance frequency is generated between the primary resonance antenna and the secondary resonance antenna, the primary resonance antenna and the secondary resonance antenna resonate with one another. And, accordingly, in a general case, the magnetic field is focused toward the second resonance antenna at a higher efficiency as compared to a case where the magnetic field that is generated from the primary antenna is radiated to a free space. And, therefore, energy may be transferred to the second resonance antenna from the first resonance antenna at a high efficiency. The magnetic induction method may be implemented similarly to the magnetic resonance method. However, in this case, the frequency of the magnetic field is not required to be a resonance frequency. Nevertheless, in the magnetic induction method, the loops configuring the primary coil and the secondary coil are required to match one another, and the distance between the loops should be very close-ranged.

Although it is not shown in the drawing, the wireless power transmitter (100) may further include a communication antenna. The communication antenna may transmit and/or receive a communication signal by using a communication carrier apart from the magnetic field communication. For example, the communication antenna may transmit and/or receive communication signals corresponding to Wi-Fi, Bluetooth, Bluetooth LE, ZigBee, NFC, and so on.

The communications & control unit (120) may transmit and/or receive information to and from the wireless power receiver (200). The communications & control unit (120) may include at least one of an IB communication module and an OB communication module.

The IB communication module may transmit and/or receive information by using a magnetic wave, which uses a specific frequency as its center frequency. For example, the communications & control unit (120) may perform in-band (IB) communication by transmitting communication information on the operating frequency of wireless power transfer through the primary coil or by receiving communication information on the operating frequency through the primary coil. At this point, the communications & control unit (120) may load information in the magnetic wave or may interpret the information that is carried by the magnetic wave by using a modulation scheme, such as binary phase shift keying (BPSK), Frequency Shift Keying (FSK) or amplitude shift keying (ASK), and so on, or a coding scheme, such as Manchester coding or non-return-to-zero level (NZR-L) coding, and so on. By using the above-described IB communication, the communications & control unit (120) may transmit and/or receive information to distances of up to several meters at a data transmission rate of several kbps.

The OB communication module may also perform out-of-band communication through a communication antenna. For example, the communications & control unit (120) may be provided to a near field communication module. Examples of the near field communication module may include communication modules, such as Wi-Fi, Bluetooth, Bluetooth LE, ZigBee, NFC, and so on.

The communications & control unit (120) may control the overall operations of the wireless power transmitter (100). The communications & control unit (120) may perform calculation and processing of diverse information and may also control each configuration element of the wireless power transmitter (100).

The communications & control unit (120) may be implemented in a computer or a similar device as hardware, software, or a combination of the same. When implemented in the form of hardware, the communications & control unit (120) may be provided as an electronic circuit performing control functions by processing electrical signals. And, when implemented in the form of software, the communications & control unit (120) may be provided as a program that operates the communications & control unit (120).

By controlling the operating point, the communications & control unit (120) may control the transmitted power. The operating point that is being controlled may correspond to a combination of a frequency (or phase), a duty cycle, a duty ratio, and a voltage amplitude. The communications & control unit (120) may control the transmitted power by adjusting any one of the frequency (or phase), the duty cycle, the duty ratio, and the voltage amplitude. Additionally, the wireless power transmitter (100) may supply a consistent level of power, and the wireless power receiver (200) may control the level of received power by controlling the resonance frequency.

Meanwhile, in the WPC system, the wireless power transmitter 100 may be classified, for example, in terms of power transmission amount. At this time, the wireless power transmitter 100 supporting a wireless power transmission amount of up to 5W (i.e., the wireless power transmitter 100 supporting the BPP protocol) can be classified into, for example, type A wireless power transmitter 100 and type B wireless power transmitter 100, the wireless power transmitter 100 supporting a wireless power transmission amount of up to 15W (i.e., the wireless power transmitter 100 supporting the EPP protocol) can be classified into, for example, type MP-A (MP-A) wireless power transmitter 100 and type MP-B (type MP-B) wireless power transmitter 100.
- Type A and Type MP A wireless power transmitters (100)

Type A and Type MP A wireless power transmitters 100 may have one or more primary coils. Type A and Type MP A wireless power transmitters 100 activate a single primary coil at a time, so a single primary cell matching the activated primary coil can be used.
- Type B and Type MP B wireless power transmitter (100)

Type B and Type MP B power transmitters may have a primary coil array. And Type B and Type MP B power transmitters can enable free positioning. To this end, Type B and Type MP B power transmitters can activate one or more primary coils in the array to realize primary cells at different locations on the interface surface.

In addition, a wireless power transmitter that utilizes magnets and supports a wireless power transmission amount of 5W or more (i.e., a wireless power transmitter that supports the MPP protocol) can be proposed, and the MPP protocol will be described later.

However, for standards after Qi v2.0, BPP can support up to 5W of power for high-power wireless power transmission, EPP can support more than 5W but less than 50W of power, and MPP can support more than 5W but less than 50W of power. In other words, EPP or MPP can be seen as supporting 5 to 50W of power.

The mobile device (450) includes a wireless power receiver (200) receiving wireless power through a secondary coil, and a load (455) receiving and storing the power that is received by the wireless power receiver (200) and supplying the received power to the device.

The wireless power receiver (200) may include a power pick-up unit (210) and a communications & control unit (220). The power pick-up unit (210) may receive wireless power through the secondary coil and may convert the received wireless power to electric energy. The power pick-up unit (210) rectifies the alternating current (AC) signal, which is received through the secondary coil, and converts the rectified signal to a direct current (DC) signal. The communications & control unit (220) may control the transmission and reception of the wireless power (transfer and reception of power).

The secondary coil may receive wireless power that is being transmitted from the wireless power transmitter (100). The secondary coil may receive power by using the magnetic field that is generated in the primary coil. Herein, in case the specific frequency corresponds a resonance frequency, magnetic resonance may occur between the primary coil and the secondary coil, thereby allowing power to be transferred with greater efficiency.

Meanwhile, although it is not shown in FIG. 4, the communications & control unit (220) may further include a communication antenna. The communication antenna may transmit and/or receive a communication signal by using a communication carrier apart from the magnetic field communication. For example, the communication antenna may transmit and/or receive communication signals corresponding to Wi-Fi, Bluetooth, Bluetooth LE, ZigBee, NFC, and so on.

The communications & control unit (220) may transmit and/or receive information to and from the wireless power transmitter (100). The communications & control unit (220) may include at least one of an IB communication module and an OB communication module.

The IB communication module may transmit and/or receive information by using a magnetic wave, which uses a specific frequency as its center frequency. For example, the communications & control unit (220) may perform IB communication by loading information in the magnetic wave and by transmitting the information through the secondary coil or by receiving a magnetic wave carrying information through the secondary coil. At this point, the communications & control unit (120) may load information in the magnetic wave or may interpret the information that is carried by the magnetic wave by using a modulation scheme, such as binary phase shift keying (BPSK), Frequency Shift Keying(FSK) or amplitude shift keying (ASK), and so on, or a coding scheme, such as Manchester coding or non-return-to-zero level (NZR-L) coding, and so on. By using the above-described IB communication, the communications & control unit (220) may transmit and/or receive information to distances of up to several meters at a data transmission rate of several kbps.

The OB communication module may also perform out-of-band communication through a communication antenna. For example, the communications & control unit (220) may be provided to a near field communication module.

Examples of the near field communication module may include communication modules, such as Wi-Fi, Bluetooth, Bluetooth LE, ZigBee, NFC, and so on.

The communications & control unit (220) may control the overall operations of the wireless power receiver (200). The communications & control unit (220) may perform calculation and processing of diverse information and may also control each configuration element of the wireless power receiver (200).

The communications & control unit (220) may be implemented in a computer or a similar device as hardware, software, or a combination of the same. When implemented in the form of hardware, the communications & control unit (220) may be provided as an electronic circuit performing control functions by processing electrical signals. And, when implemented in the form of software, the communications & control unit (220) may be provided as a program that operates the communications & control unit (220).

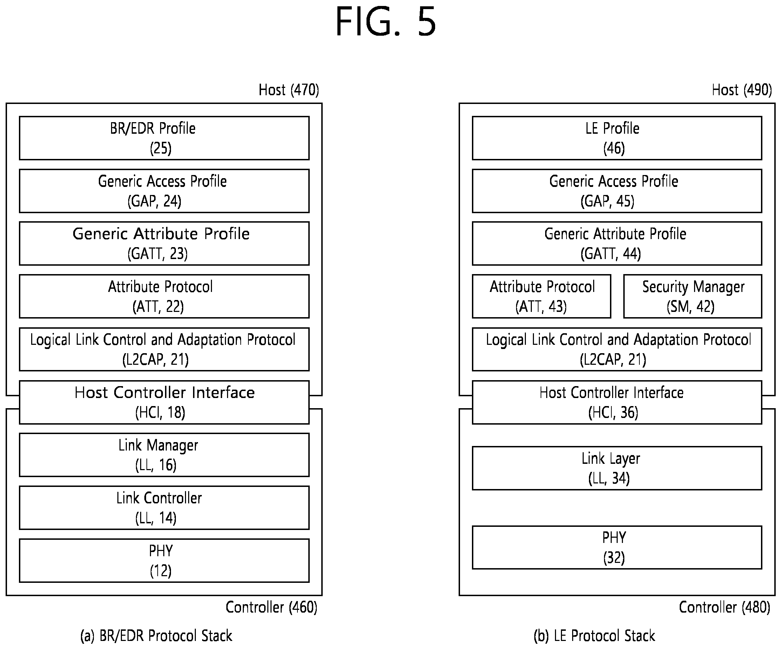

When the communication/control circuit 120 and the communication/control circuit 220 are Bluetooth or Bluetooth LE as an OB communication module or a short-range communication module, the communication/control circuit 120 and the communication/control circuit 220 may each be implemented and operated with a communication architecture as shown in FIG. 5.

FIG. 5 is a diagram illustrating an example of a Bluetooth communication architecture to which an embodiment according to the present disclosure may be applied.

Referring to FIG. 5, (a) of FIG. 5 shows an example of a protocol stack of Bluetooth basic rate (BR)/enhanced data rate (EDR) supporting GATT, and (b) shows an example of Bluetooth low energy (BLE) protocol stack.

Specifically, as shown in (a) of FIG. 5, the Bluetooth BR/EDR protocol stack may include an upper control stack 460 and a lower host stack 470 based on a host controller interface (HCI) 18.

The host stack (or host module) 470 refers to hardware for transmitting or receiving a Bluetooth packet to or from a wireless transmission/reception module which receives a Bluetooth signal of 2.4 GHz, and the controller stack 460 is connected to the Bluetooth module to control the Bluetooth module and perform an operation.

The host stack 470 may include a BR/EDR PHY layer 12, a BR/EDR baseband layer 14, and a link manager layer 16.

The BR/EDR PHY layer 12 is a layer that transmits and receives a 2.4 GHz radio signal, and in the case of using Gaussian frequency shift keying (GFSK) modulation, the BR/EDR PHY layer 12 may transmit data by hopping 79 RF channels.

The BR/EDR baseband layer 14 serves to transmit a digital signal, selects a channel sequence for hopping 1400 times per second, and transmits a time slot with a length of 625 us for each channel.

The link manager layer 16 controls an overall operation (link setup, control, security) of Bluetooth connection by utilizing a link manager protocol (LMP).

The link manager layer 16 may perform the following functions.
- Performs ACL/SCO logical transport, logical link setup, and control.
- Detach: It interrupts connection and informs a counterpart device about a reason for the interruption.
- Performs power control and role switch.
- Performs security (authentication, pairing, encryption) function.

The host controller interface layer 18 provides an interface between a host module and a controller module so that a host provides commands and data to the controller and the controller provides events and data to the host.

The host stack (or host module, 470) includes a logical link control and adaptation protocol (L2CAP) 21, an attribute protocol 22, a generic attribute profile (GATT) 23, a generic access profile (GAP) 24, and a BR/EDR profile 25.

The logical link control and adaptation protocol (L2CAP) 21 may provide one bidirectional channel for transmitting data to a specific protocol or profile.

The L2CAP 21 may multiplex various protocols, profiles, etc., provided from upper Bluetooth.

L2CAP of Bluetooth BR/EDR uses dynamic channels, supports protocol service multiplexer, retransmission, streaming mode, and provides segmentation and reassembly, per-channel flow control, and error control.

The generic attribute profile (GATT) 23 may be operable as a protocol that describes how the attribute protocol 22 is used when services are configured. For example, the generic attribute profile 23 may be operable to specify how ATT attributes are grouped together into services and may be operable to describe features associated with services.

Accordingly, the generic attribute profile 23 and the attribute protocols (ATT) 22 may use features to describe device's state and services, how features are related to each other, and how they are used.

The attribute protocol 22 and the BR/EDR profile 25 define a service (profile) using Bluetooth BR/EDR and an application protocol for exchanging these data, and the generic access profile (GAP) 24 defines device discovery, connectivity, and security level.

As shown in (b) of FIG. 5, the Bluetooth LE protocol stack includes a controller stack 480 operable to process a wireless device interface important in timing and a host stack 490 operable to process high level data.

First, the controller stack 480 may be implemented using a communication module that may include a Bluetooth wireless device, for example, a processor module that may include a processing device such as a microprocessor.

The host stack 490 may be implemented as a part of an OS running on a processor module or as an instantiation of a package on the OS.

In some cases, the controller stack and the host stack may be run or executed on the same processing device in a processor module.

The controller stack 480 includes a physical layer (PHY) 32, a link layer 34, and a host controller interface 36.

The physical layer (PHY, wireless transmission/reception module) 32 is a layer that transmits and receives a 2.4 GHz radio signal and uses Gaussian frequency shift keying (GFSK) modulation and a frequency hopping scheme including 40 RF channels.

The link layer 34, which serves to transmit or receive Bluetooth packets, creates connections between devices after performing advertising and scanning functions using 3 advertising channels and provides a function of exchanging data packets of up to 257 bytes through 37 data channels.

The host stack includes a generic access profile (GAP) 45, a logical link control and adaptation protocol (L2CAP, 41), a security manager (SM) 42, and an attribute protocol (ATT) 43, a generic attribute profile (GATT) 44, a generic access profile 45, and an LE profile 46. However, the host stack 490 is not limited thereto and may include various protocols and profiles.

The host stack multiplexes various protocols, profiles, etc., provided from upper Bluetooth using L2CAP.

First, the logical link control and adaptation protocol (L2CAP) 41 may provide one bidirectional channel for transmitting data to a specific protocol or profile.

The L2CAP 41 may be operable to multiplex data between higher layer protocols, segment and reassemble packages, and manage multicast data transmission.

In Bluetooth LE, three fixed channels (one for signaling CH, one for security manager, and one for attribute protocol) are basically used. Also, a dynamic channel may be used as needed.

Meanwhile, a basic channel/enhanced data rate (BR/EDR) uses a dynamic channel and supports protocol service multiplexer, retransmission, streaming mode, and the like.

The security manager (SM) 42 is a protocol for authenticating devices and providing key distribution.

The attribute protocol (ATT) 43 defines a rule for accessing data of a counterpart device in a server-client structure. The ATT has the following 6 message types (request, response, command, notification, indication, confirmation).
① Request and Response message: A request message is a message for requesting specific information from the client device to the server device, and the response message is a response message to the request message, which is a message transmitted from the server device to the client device.
② Command message: It is a message transmitted from the client device to the server device in order to indicate a command of a specific operation. The server device does not transmit a response with respect to the command message to the client device.
③ Notification message: It is a message transmitted from the server device to the client device in order to notify an event, or the like. The client device does not transmit a confirmation message with respect to the notification message to the server device.
(4) Indication and confirmation message: It is a message transmitted from the server device to the client device in order to notify an event, or the like. Unlike the notification message, the client device transmits a confirmation message regarding the indication message to the server device.

In the present disclosure, when the GATT profile using the attribute protocol (ATT) 43 requests long data, a value regarding a data length is transmitted to allow a client to clearly know the data length, and a characteristic value may be received from a server by using a universal unique identifier (UUID).

The generic access profile (GAP) 45, a layer newly implemented for the Bluetooth LE technology, is used to select a role for communication between Bluetooth LED devices and to control how a multi-profile operation takes place.

Also, the generic access profile (GAP) 45 is mainly used for device discovery, connection generation, and security procedure part, defines a scheme for providing information to a user, and defines types of attributes as follows.
(1) Service: It defines a basic operation of a device by a combination of behaviors related to data
(2) Include: It defines a relationship between services
(3) Characteristics: It is a data value used in a server
(4) Behavior: It is a format that may be read by a computer defined by a UUID (value type).

The LE profile 46, including profiles dependent upon the GATT, is mainly applied to a Bluetooth LE device. The LE profile 46 may include, for example, Battery, Time, FindMe, Proximity, Time, Object Delivery Service, and the like, and details of the GATT-based profiles are as follows.
(1) Battery: Battery information exchanging method
(2) Time: Time information exchanging method
(3) FindMe: Provision of alarm service according to distance
(4) Proximity: Battery information exchanging method
⑤ Time: Time information exchanging method

The generic attribute profile (GATT) 44 may operate as a protocol describing how the attribute protocol (ATT) 43 is used when services are configured. For example, the GATT 44 may operate to define how ATT attributes are grouped together with services and operate to describe features associated with services.

Thus, the GATT 44 and the ATT 43 may use features in order to describe status and services of a device and describe how the features are related and used.

Hereinafter, procedures of the Bluetooth low energy (BLE) technology will be briefly described.

The BLE procedure may be classified as a device filtering procedure, an advertising procedure, a scanning procedure, a discovering procedure, and a connecting procedure.

### Device Filtering Procedure

The device filtering procedure is a method for reducing the number of devices performing a response with respect to a request, indication, notification, and the like, in the controller stack.

When requests are received from all the devices, it is not necessary to respond thereto, and thus, the controller stack may perform control to reduce the number of transmitted requests to reduce power consumption.

An advertising device or scanning device may perform the device filtering procedure to limit devices for receiving an advertising packet, a scan request or a connection request.

Here, the advertising device refers to a device transmitting an advertising event, that is, a device performing an advertisement and is also termed an advertiser.

The scanning device refers to a device performing scanning, that is, a device transmitting a scan request.

In the BLE, in a case in which the scanning device receives some advertising packets from the advertising device, the scanning device should transmit a scan request to the advertising device.

However, in a case in which a device filtering procedure is used so a scan request transmission is not required, the scanning device may disregard the advertising packets transmitted from the advertising device.

Even in a connection request process, the device filtering procedure may be used. In a case in which device filtering is used in the connection request process, it is not necessary to transmit a response with respect to the connection request by disregarding the connection request.

### Advertising Procedure

The advertising device performs an advertising procedure to perform undirected broadcast to devices within a region.

Here, the undirected broadcast is advertising toward all the devices, rather than broadcast toward a specific device, and all the devices may scan advertising to make an supplemental information request or a connection request.

In contrast, directed advertising may make an supplemental information request or a connection request by scanning advertising for only a device designated as a reception device.

The advertising procedure is used to establish a Bluetooth connection with an initiating device nearby.

Or, the advertising procedure may be used to provide periodical broadcast of user data to scanning devices performing listening in an advertising channel.

In the advertising procedure, all the advertisements (or advertising events) are broadcast through an advertisement physical channel.

The advertising devices may receive scan requests from listening devices performing listening to obtain additional user data from advertising devices. The advertising devices transmit responses with respect to the scan requests to the devices which have transmitted the scan requests, through the same advertising physical channels as the advertising physical channels in which the scan requests have been received.

Broadcast user data sent as part of advertising packets are dynamic data, while the scan response data is generally static data.

The advertisement device may receive a connection request from an initiating device on an advertising (broadcast) physical channel. If the advertising device has used a connectable advertising event and the initiating device has not been filtered according to the device filtering procedure, the advertising device may stop advertising and enter a connected mode. The advertising device may start advertising after the connected mode.

### Scanning Procedure

A device performing scanning, that is, a scanning device performs a scanning procedure to listen to undirected broadcasting of user data from advertising devices using an advertising physical channel.

The scanning device transmits a scan request to an advertising device through an advertising physical channel in order to request additional data from the advertising device. The advertising device transmits a scan response as a response with respect to the scan request, by including additional user data which has requested by the scanning device through an advertising physical channel.

The scanning procedure may be used while being connected to other BLE device in the BLE piconet.

If the scanning device is in an initiator mode in which the scanning device may receive an advertising event and initiates a connection request. The scanning device may transmit a connection request to the advertising device through the advertising physical channel to start a Bluetooth connection with the advertising device.

When the scanning device transmits a connection request to the advertising device, the scanning device stops the initiator mode scanning for additional broadcast and enters the connected mode.

### Discovering Procedure

Devices available for Bluetooth communication (hereinafter, referred to as "Bluetooth devices") perform an advertising procedure and a scanning procedure in order to discover devices located nearby or in order to be discovered by other devices within a given area.

The discovering procedure is performed asymmetrically. A Bluetooth device intending to discover other device nearby is termed a discovering device, and listens to discover devices advertising an advertising event that may be scanned. A Bluetooth device which may be discovered by other device and available to be used is termed a discoverable device and positively broadcasts an advertising event such that it may be scanned by other device through an advertising (broadcast) physical channel.

Both the discovering device and the discoverable device may have already been connected with other Bluetooth devices in a piconet.

### Connecting Procedure

A connecting procedure is asymmetrical, and requests that, while a specific Bluetooth device is performing an advertising procedure, another Bluetooth device should perform a scanning procedure.

That is, an advertising procedure may be aimed, and as a result, only one device may response to the advertising. After a connectable advertising event is received from an advertising device, a connecting request may be transmitted to the advertising device through an advertising (broadcast) physical channel to initiate connection.

Hereinafter, operational states, that is, an advertising state, a scanning state, an initiating state, and a connection state, in the BLE technology will be briefly described.

### Advertising State

A link layer (LL) enters an advertising state according to an instruction from a host (stack). In a case in which the LL is in the advertising state, the LL transmits an advertising packet data unit (PDU) in advertising events.

Each of the advertising events include at least one advertising PDU, and the advertising PDU is transmitted through an advertising channel index in use. After the advertising PDU is transmitted through an advertising channel index in use, the advertising event may be terminated, or in a case in which the advertising device may need to secure a space for performing other function, the advertising event may be terminated earlier.

### Scanning State

The LL enters the scanning state according to an instruction from the host (stack). In the scanning state, the LL listens to advertising channel indices.

The scanning state includes two types: passive scanning and active scanning. Each of the scanning types is determined by the host.

Time for performing scanning or an advertising channel index are not defined.

During the scanning state, the LL listens to an advertising channel index in a scan window duration. A scan interval is defined as an interval between start points of two continuous scan windows.

When there is no collision in scheduling, the LL should listen in order to complete all the scan intervals of the scan window as instructed by the host. In each scan window, the LL should scan other advertising channel index. The LL uses every available advertising channel index.

In the passive scanning, the LL only receives packets and cannot transmit any packet.

In the active scanning, the LL performs listening in order to be relied on an advertising PDU type for requesting advertising PDUs and advertising device-related supplemental information from the advertising device.

### Initiating State

The LL enters the initiating state according to an instruction from the host (stack).

When the LL is in the initiating state, the LL performs listening on advertising channel indices.

During the initiating state, the LL listens to an advertising channel index during the scan window interval.

### Connection State

When the device performing a connection state, that is, when the initiating device transmits a CONNECT_REQ PDU to the advertising device or when the advertising device receives a CONNECT_REQ PDU from the initiating device, the LL enters a connection state.

It is considered that a connection is generated after the LL enters the connection state. However, it is not necessary to consider that the connection should be established at a point in time at which the LL enters the connection state. The only difference between a newly generated connection and an already established connection is a LL connection supervision timeout value.

When two devices are connected, the two devices play different roles.

An LL serving as a master is termed a master, and an LL serving as a slave is termed a slave. The master adjusts a timing of a connecting event, and the connecting event refers to a point in time at which the master and the slave are synchronized.

Hereinafter, packets defined in an Bluetooth interface will be briefly described. BLE devices use packets defined as follows.

### Packet Format

The LL has only one packet format used for both an advertising channel packet and a data channel packet.

Each packet includes four fields of a preamble, an access address, a PDU, and a CRC.

When one packet is transmitted in an advertising physical channel, the PDU may be an advertising channel PDU, and when one packet is transmitted in a data physical channel, the PDU may be a data channel PDU.

### Advertising Channel PDU

An advertising channel PDU has a 16-bit header and payload having various sizes.

A PDU type field of the advertising channel PDU included in the heater indicates PDU types defined in Table 1 below.

**[Table 1]**

| **PDU Type** | **Packet Name** |
|---|---|
| 0000 | ADV_IND |
| 0001 | ADV_DIRECT_IND |
| 0010 | ADV_NONCONN_IND |
| 0011 | SCAN_REQ |
| 0100 | SCAN_RSP |
| 0101 | CONNECT_REQ |
| 0110 | ADV_SCAN_IND |
| 0111-1111 | Reserved |

### Advertising PDU

The following advertising channel PDU types are termed advertising PDUs and used in a specific event.
ADV_IND: Connectable undirected advertising event
ADV_DIRECT_IND: Connectable directed advertising event
ADV_NONCONN_IND: Unconnectable undirected advertising event
ADV_SCAN_ IND: Scannable undirected advertising event

The PDUs are transmitted from the LL in an advertising state, and received by the LL in a scanning state or in an initiating state.

### Scanning PDU

The following advertising channel DPU types are termed scanning PDUs and are used in a state described hereinafter.
SCAN_REQ: Transmitted by the LL in a scanning state and received by the LL in an advertising state.
SCAN_RSP: Transmitted by the LL in the advertising state and received by the LL in the scanning state.

### Initiating PDU

The following advertising channel PDU type is termed an initiating PDU.
CONNECT_REQ: Transmitted by the LL in the initiating state and received by the LL in the advertising state.

### Data Channel PDU

The data channel PDU may include a message integrity check (MIC) field having a 16-bit header and payload having various sizes.

The procedures, states, and packet formats in the BLE technology discussed above may be applied to perform the methods proposed in the present disclosure.

Referring to FIG. 4, the load (455) may correspond to a battery. The battery may store energy by using the power that is being outputted from the power pick-up unit (210). Meanwhile, the battery is not mandatorily required to be included in the mobile device (450). For example, the battery may be provided as a detachable external feature. As another example, the wireless power receiver may include an operating means that may execute diverse functions of the electronic device instead of the battery.

As shown in the drawing, although the mobile device (450) is illustrated to be included in the wireless power receiver (200) and the base station (400) is illustrated to be included in the wireless power transmitter (100), in a broader meaning, the wireless power receiver (200) may be identified (or regarded) as the mobile device (450), and the wireless power transmitter (100) may be identified (or regarded) as the base station (400).

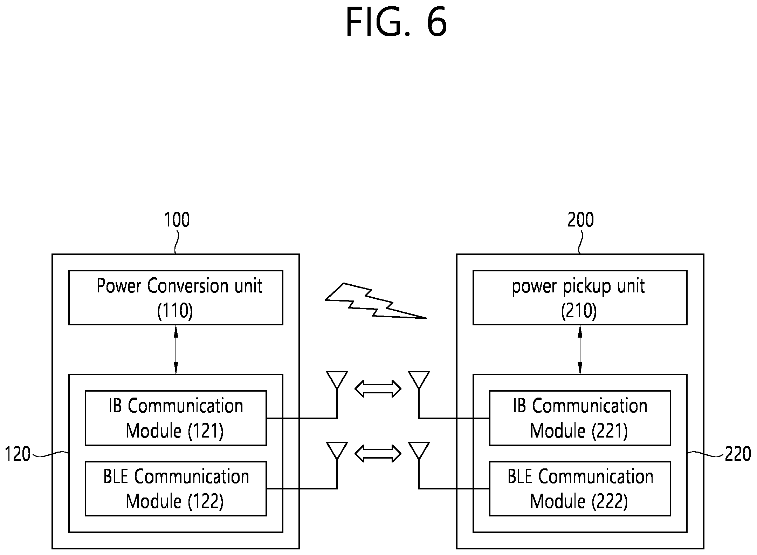

When the communication/control circuit 120 and the communication/control circuit 220 include Bluetooth or Bluetooth LE as an OB communication module or a short-range communication module in addition to the IB communication module, the wireless power transmitter 100 including the communication/control circuit 120 and the wireless power receiver 200 including the communication/control circuit 220 may be represented by a simplified block diagram as shown in FIG. 6.

FIG. 6 is a block diagram illustrating a wireless power transfer system using BLE communication according to an example.

Referring to FIG. 6, the wireless power transmitter 100 includes a power conversion circuit 110 and a communication/control circuit 120. The communication/control circuit 120 includes an in-band communication module 121 and a BLE communication module 122.

Meanwhile, the wireless power receiver 200 includes a power pickup circuit 210 and a communication/control circuit 220. The communication/control circuit 220 includes an in-band communication module 221 and a BLE communication module 222.

In one aspect, the BLE communication modules 122 and 222 perform the architecture and operation according to FIG. 5. For example, the BLE communication modules 122 and 222 may be used to establish a connection between the wireless power transmitter 100 and the wireless power receiver 200 and exchange control information and packets necessary for wireless power transfer.

In another aspect, the communication/control circuit 120 may be configured to operate a profile for wireless charging. Here, the profile for wireless charging may be GATT using BLE transmission.

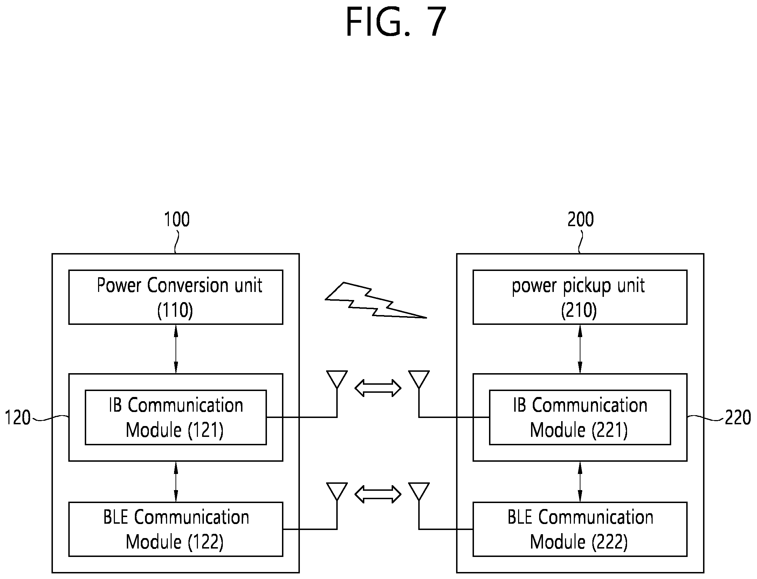

FIG. 7 is a block diagram illustrating a wireless power transfer system using BLE communication according to another example.

Referring to FIG. 7, the communication/control circuits 120 and 220 respectively include only in-band communication modules 121 and 221, and the BLE communication modules 122 and 222 may be provided to be separated from the communication/control circuits 120 and 220.

Hereinafter, the coil or coil unit includes a coil and at least one device being approximate to the coil, and the coil or coil unit may also be referred to as a coil assembly, a coil cell, or a cell.

Meanwhile, when the user places the wireless power receiver 200 within the operating volume of the wireless power transmitter 100, the wireless power transmitter 100 and the wireless power receiver 200 begin communication for the purpose of configuring and controlling power transmission. At this time, the power signal can provide a carrier for all communications, and the protocol for communication can be composed of several steps. Hereinafter, the communication protocol will be described.

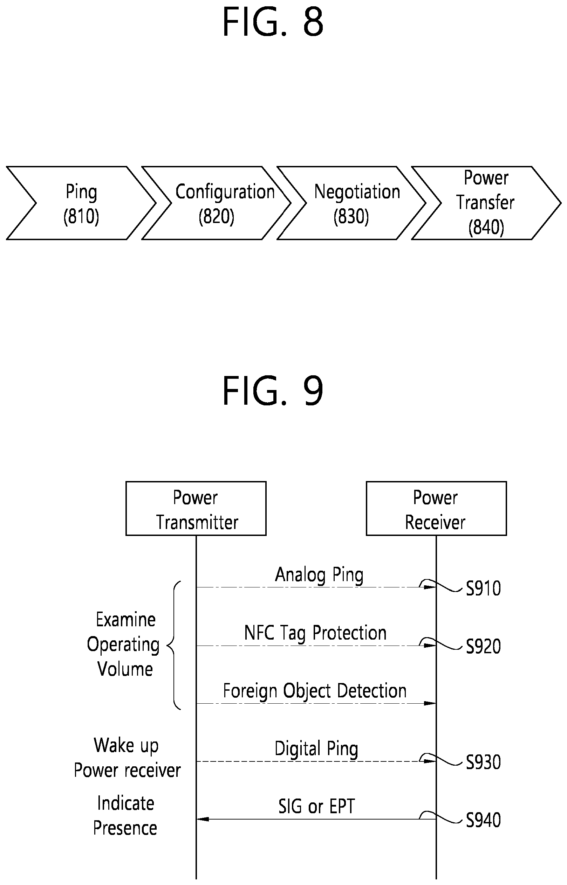

FIG. 8 is a state transition diagram for explaining the wireless power transfer procedure.

WPC can define two communication protocols.
- Baseline Protocol (or BPP): May refer to an original protocol that supports only one-way communication from the wireless power receiver 200 to the wireless power transmitter 100.
- Extended Protocol (or EPP): Supports two-way communication and improved foreign object detection (FOD) functions, and can also support data transport stream functions and authentication options.

Referring to FIG. 8, the power transfer operation between the wireless power transmitter 100 and the wireless power receiver 200 according to an embodiment of the present specification can be largely divided into a ping phase (810), a configuration phase (820), a negotiation phase (830), and a power transfer phase.
- Ping Phase (810)

In the ping phase 810, the wireless power transmitter 100 may attempt to establish communication with the wireless power receiver 200. Before attempting to establish communication, measurements may be performed to determine whether there are objects such as bank cards, coins or other metals that may be damaged or heated during power transfer. Here, these measurements can be performed without waking up the wireless power receiver 200.

Here, after obtaining design information from the wireless power receiver 200, the wireless power transmitter 100 may postpone a conclusion about whether the detected metal is a foreign object or a friendly metal to the negotiation phase 830.
- Configuration Phase (820)

In the configuration phase 820, the wireless power receiver 200 may send basic identification and configuration data to the wireless power receiver 200. And, both the wireless power transmitter 100 and the wireless power receiver 200 can use this information to create a baseline power transfer contract.

Additionally, the wireless power transmitter 100 and the wireless power receiver 200 may determine whether to continue the baseline protocol or the extended protocol in the configuration phase 820.

Here, the wireless power receiver 200 can use functions such as enhanced FOD, data transport stream, and authentication only when implementing the extended protocol.
- Negotiation Phase (830)

In the negotiation phase 830, the wireless power transmitter 100 and the wireless power receiver 200 may establish an extended power transfer contract that includes additional settings and restrictions. Additionally, the wireless power receiver 200 may provide design information to the wireless power transmitter 100. Later, the design information can be used to complete the FOD before transitioning to the power transfer phase 840.

Here, the negotiation phase 830 may correspond to a step that does not exist in the baseline protocol.
- Power transfer phase (840)

The power transfer phase 840 may be a step in which power is transferred to the load of the wireless power receiver 200.

In the extended protocol, the wireless power transmitter 100 and the wireless power receiver 200 may perform system calibration when this step begins. This stage may occasionally be interrupted to renegotiate elements of the power transfer contract. However, power transfer may continue even during this renegotiation.

Below, as previously explained, each protocol for Ping Phase 810, Configuration Phase 820, Negotiation Phase 830, and Power Transfer Phase 840 will be explained in more detail.

### 1. Ping Phase (810)

When the ping phase 810 begins, the wireless power transmitter 100 does not yet know whether the wireless power receiver 200 is within the operating volume. In addition, the wireless power transmitter 100 cannot recognize the wireless power receiver 200. For that reason, this system is usually disabled due to lack of power signal.

In this situation, before the wireless power transmitter 100 starts a digital ping to request a response from the wireless power receiver 200, the wireless power transmitter 100 may go through the following steps.

FIG. 9 schematically shows an example of the protocol of the ping phase 810.

According to FIG. 9, the wireless power transmitter 100 can perform analog ping (S910). That is, the wireless power transmitter 100 can confirm whether an object exists in the operating volume by transmitting an analog ping. For example, a wireless power transmitter can detect whether an object exists in the operating space based on a change in current in the transmission coil or primary coil.

The wireless power transmitter 100 may apply NFC tag protection (S920). Here, NFC tag protection can be performed through the following procedures.
a) First, it can be confirmed whether one or more of the detected objects include an NFC tag.
b) Afterwards, it can be checked whether the object containing the NFC tag can withstand the power signal without damage.
c) If the wireless power transmitter 100 determines that the NFC tag cannot withstand the power signal, it does not start digital ping and maintains the ping phase, the wireless power transmitter 100 can inform the user of the reason why it cannot proceed.

The wireless power transmitter 100 may perform foreign object detection (S930). That is, the wireless power transmitter 100 can collect information helpful in determining whether there is a foreign object other than the wireless power receiver 200. For this purpose, the wireless power transmitter 100 can use various methods such as a pre-power FOD method.

Meanwhile, in the three steps (S910, S920, and S930) described above, the radio power receiver may not operate.

If the wireless power transmitter 100 performs the above steps and determines that the wireless power receiver 200 is potentially present in the operating volume, the wireless power transmitter 100 may start a digital ping (S940). Here, the digital ping may request a response such as a signal strength (SIG) data packet or an end power transfer (EPT) data packet from the wireless power receiver 200.

Thereafter, the wireless power transmitter 100 may receive the SIG or EPT from the wireless power receiver 200 (S950). Here, the SIG data packet may provide a measure of coupling, and the SIG data packet may include information about signal strength values. Additionally, the EPT data packet may provide a request to stop power transmission and a reason for the request.

If the wireless power transmitter 100 does not receive the above response from the wireless power receiver 200, the wireless power transmitter 100 may repeat the above steps while remaining in the ping phase 810.

### 2. Configuration phase (820)

The configuration phase 820 is part of the following protocol.
- The wireless power receiver 200 can identify itself to the wireless power transmitter 100.
- The wireless power receiver 200 and the wireless power transmitter 100 can establish a baseline power transfer contract.
- The wireless power receiver 200 and the wireless power transmitter 100 can determine the protocol variant to be used for power transmission.

In the configuration phase 820, the wireless power transmitter 100 and the wireless power receiver 200 may continue to operate using the digital ping parameter. This may mean that the power and current levels of both the wireless power transmitter 100 and the wireless power receiver 200 change only when the user moves the wireless power receiver 200 from position within the operating volume.

Hereinafter, the protocol in the configuration phase 820 will be described in more detail.

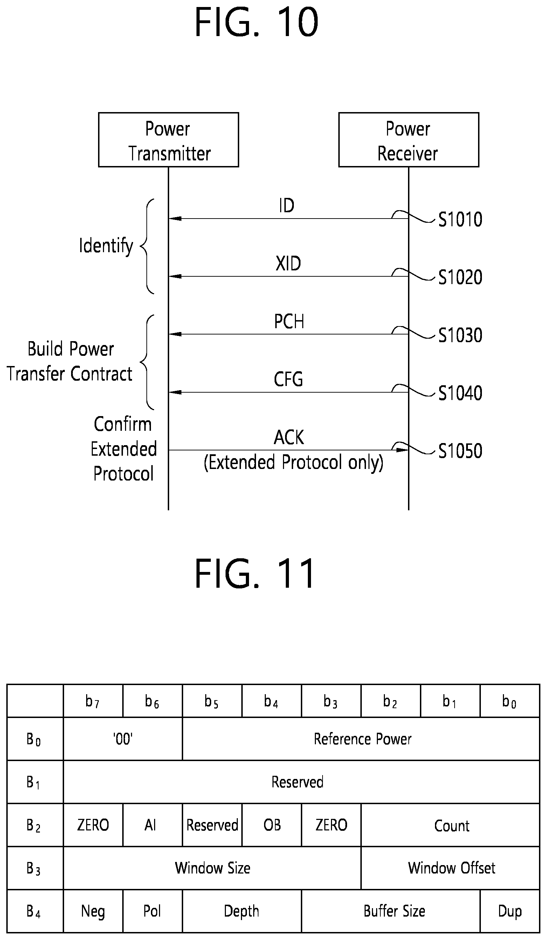

FIG. 10 schematically shows an example of the protocol of the configuration phase 820.

According to FIG. 10, the wireless power transmitter 100 may receive an identification (ID) from the wireless power receiver 200 (S1010). Alternatively, the wireless power transmitter 100 may also receive an extended identification (XID) from the wireless power receiver 200 (S1020). That is, the wireless power receiver 200 may identify itself using an ID data packet and, optionally, an XID data packet.

The wireless power transmitter 100 may selectively receive a power control hold-off (PCH) data packet from the wireless power receiver 200 (S1030), the wireless power transmitter 100 may receive a CFG data packet from the wireless power receiver 200 (S1040). That is, the wireless power receiver 200 can provide data for use in a power transfer contract using PCH and/or CFG data packets..

Finally, the wireless power transmitter 100 can check the extended protocol if possible (S1050).

Each data packet described above can be summarized as follows.
- ID: The ID data packet may be information that identifies the wireless power receiver 200. Here, the ID may include a manufacturer code, basic device identifier, etc. In addition, the ID may also include information that identifies the presence or absence of an XID data packet in the setup phase.
- XID: XID data packets may contain additional identification data.
- PCH: The PCH data packet may configure the delay between the reception of the CE data packet and the wireless power transmitter 100 starting coil current adjustment.
- CFG: CFG data packets can provide basic configuration data.

For example, a CFG data packet can provide all parameters governing power transfer in the baseline protocol. In addition, CFG data packets can provide all FSK communication parameters used in the extended protocol. Additionally, CFG data packets may provide additional functions of the wireless power receiver 200.

FIG. 11 is a diagram illustrating a message field of a configuration packet (CFG) of a wireless power reception device according to an embodiment.

According to FIG. 11, the configuration packet (CFG) according to one embodiment may have a header value of 0x51, and the message field of the configuration packet (CFG) may include a 1-bit authentication (AI) flag and a 1-bit outband (OB) flag.

The authentication flag (AI) indicates whether the wireless power receiving device supports the authentication function. For example, if the value of the authentication flag (AI) is '1', it indicates that the wireless power receiving device supports the authentication function or can operate as an authentication initiator, if the value of the authentication flag (AI) is '0', it may indicate that the wireless power receiving device does not support the authentication function or cannot operate as an authentication initiator.

The out-of-band (OB) flag indicates whether the wireless power receiving device supports out-of-band communication. For example, if the value of the out-of-band (OB) flag is '1', the wireless power receiver indicates out-of-band communication, if the value of the outband (OB) flag is '0', it may indicate that the wireless power receiving device does not support outband communication.

Provision of the ID and/or XID described above is for identification purposes. Additionally, the provision of PCH and/or CFG is for the construction of a power transfer contract.

### 3. Negotiation phase (830)

The negotiation phase 830 is part of an extended protocol that allows the wireless power transmitter 100 and the wireless power receiver 200 to change the power transfer contract. There are two types of this stage.
- Negotiation phase (830): The negotiation phase (830) directly follows the configuration phase (820) and serves to create an initial extended power transfer contract. In addition, the negotiation phase 830 also serves to complete the pre-power FOD function. Here, the length of the negotiation phase is not limited.
- Renegotiation phase: The renegotiation phase can interrupt the power transfer phase (840) multiple times and generally serves to adjust a single element of the power transfer contract. In addition, FOD/qf, FOD/rf, and SRQ/rpr data packets may not be used in the renegotiation phase. Constraints on CE data packets in the power transfer phase 840 limit the length of the renegotiation phase.

In the negotiation or renegotiation phase, the power transfer contract related to the reception/transmission of wireless power between a wireless power receiving device and a wireless power transmitting device is expanded or changed, or a renewal of the power transfer contract is made that adjusts at least some of the elements of the power transfer contract, or information may be exchanged to establish out-of-band communication.

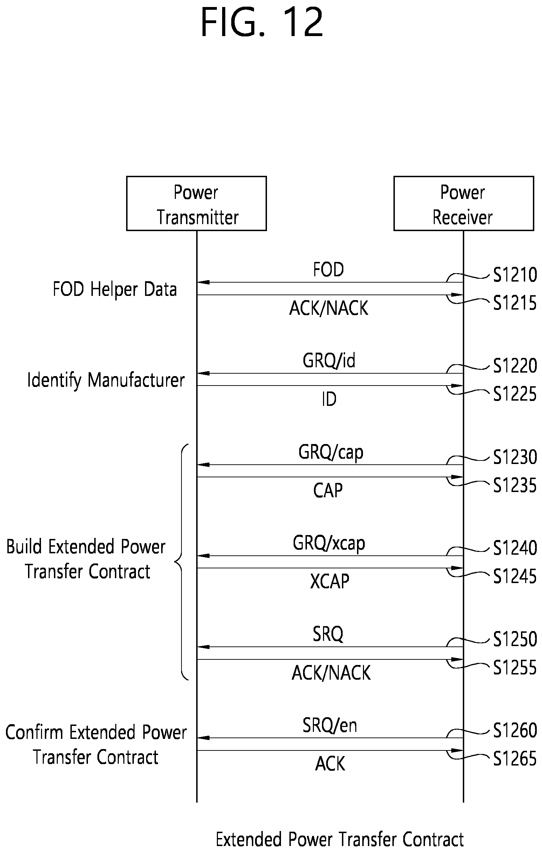

FIG. 12 is a flowchart schematically illustrating a protocol of a negotiation stage or a renegotiation stage according to an embodiment.

Referring to FIG. 12, the wireless power transmitter 100 may receive a FOD status data packet (e.g. FOD) from the wireless power receiver 200 (S1210). Here, the wireless power receiver 200 can use the FOD status data packet to inform the wireless power transmitter 100 of the effect its presence has on selected properties of the reference wireless power transmitter 100. And, the wireless power transmitter 100 can configure the FOD function using this information.

The wireless power transmitter 100 may transmit an ACK/NAK for the FOD status data packet to the wireless power receiver 200 (S1215).

Meanwhile, the wireless power receiver 200 may receive an identification data packet (ID), a capabilities data packet (CAP), and an extended CAP (XCAP) of the wireless power transmitter 100 using a general request data packet (GRQ).

The general request packet (GRQ) may have a header value of 0x07 and may include a 1-byte message field. The message field of the general request packet (GRQ) may include a header value of a data packet that the wireless power receiver 200 requests from the wireless power transmitter 100 using the GRQ packet.

For example, in the negotiation phase or renegotiation phase, the wireless power receiver 200 may transmit a GRQ packet (GRQ/id) requesting an ID packet of the wireless power transmitter 100 to the wireless power transmitter 100 (S1220).

The wireless power transmitter 100 that has received the GRQ/id may transmit an ID packet to the wireless power receiver 200 (S1225). The ID packet of the wireless power transmitter 100 includes information about the 'Manufacturer Code'. The ID packet containing information about the 'Manufacturer Code' allows the manufacturer of the wireless power transmitter 100 to be identified.

Or, in the negotiation phase or re-negotiation phase, the wireless power receiver 200 may transmit a GRQ packet (GRQ/cap) requesting a capability packet (CAP) of the wireless power transmitter 100 to the wireless power transmitter 100 (S1230). The message field of GRQ/cap may include the header value (0x31) of the capability packet (CAP).

The wireless power transmitter 100 that has received the GRQ/cap may transmit a capability packet (CAP) to the wireless power receiver 200 (S1235).

Or, in the negotiation phase or re-negotiation phase, the wireless power receiver 200 may transmit a GRQ packet (GRQ/xcap) requesting a capability packet (CAP) of the wireless power transmitter 100 to the wireless power transmitter 100 (S1240). The message field of GRQ/xcap may include the header value (0x32) of the performance packet (XCAP).

The wireless power transmitter 100 that has received GRQ/xcap may transmit a capability packet (XCAP) to the wireless power receiver 200 (S1245).

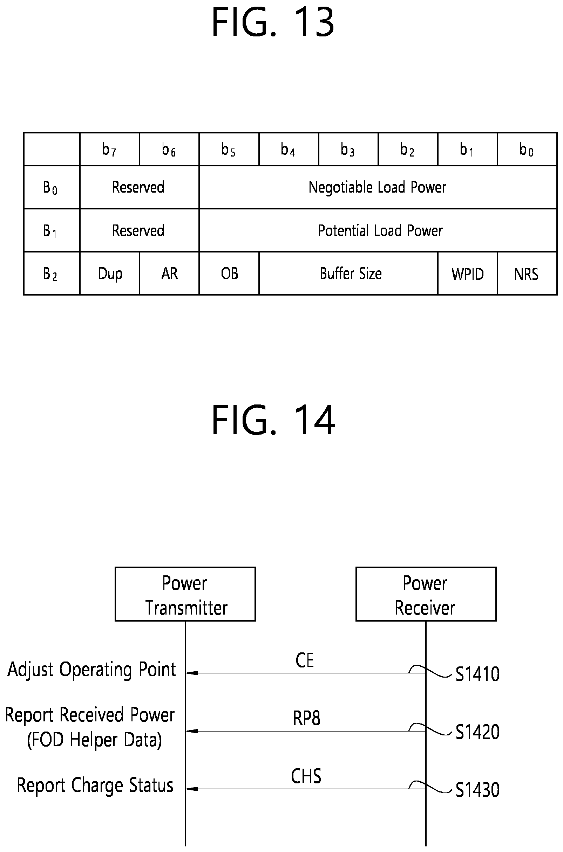

FIG. 13 is a diagram illustrating a message field of a capability packet (CAP) of a wireless power transmission device according to an embodiment.

A capability packet (CAP) according to one embodiment may have a header value of 0x31 and, referring to FIG. 13, may include a 3-byte message field.

Referring to FIG. 13, the message field of the capability packet (CAP) may include a 1-bit authentication (AR) flag and a 1-bit outband (OB) flag.

The authentication flag (AR) indicates whether the wireless power transmitter 100 supports the authentication function. For example, if the value of the authentication flag (AR) is '1', it indicates that the wireless power transmitter 100 supports an authentication function or can operate as an authentication responder, if the value of the authentication flag (AR) is '0', it may indicate that the wireless power transmitter 100 does not support the authentication function or cannot operate as an authentication responder.

The outband (OB) flag indicates whether the wireless power transmitter 100 supports outband communication. For example, if the value of the outband (OB) flag is '1', the wireless power transmitter 100 instructs outband communication, if the value of the out-of-band (OB) flag is '0', this may indicate that the wireless power transmitter 100 does not support out-of-band communication.

In the negotiation phase, the wireless power receiver 200 can receive the capability packet (CAP) of the wireless power transmitter 100 and check whether the wireless power transmitter 100 supports the authentication function and whether out-band communication is supported.

Returning to FIG. 12, the wireless power receiver 200 can update the elements of the power transfer contract (Power Transfer Contract) related to the power to be provided in the power transfer phase using at least one specific request packet (SRQ, Specific Request data packet) in the negotiation phase or re-negotiation phase (S1250), ACK/NAK for this can be received (S1255).

Meanwhile, in order to confirm the extended power transfer contract and end the negotiation phase, the wireless power receiver 200 transmits SRQ/en to the wireless power transmitter 100 (S1260), it can receive ACK from the wireless power transmitter 100 (S1265).

### 4. Power transfer phase (840)

The power transfer phase 840 is a part of the protocol in which actual power is transferred to the load of the wireless power receiver 200. Here, power transfer may proceed according to the conditions of the power transfer contract created in the negotiation phase 830.

### <Power control based on CE>

The wireless power receiver 200 can control the power level by transmitting control error (CE) data that measures the deviation between the target and the actual operating point of the wireless power receiver 200 to the wireless power transmitter 100. The wireless power transmitter 100 and wireless power receiver 200 aim to make the control error data zero, at which point the system will operate at the target power level.

### <In-power transfer FOD method>

In addition to control error data, the wireless power transmitter 100 and the wireless power receiver 200 may exchange information to facilitate FOD. The wireless power receiver 200 regularly reports the amount of power it receives (received power level) to the wireless power transmitter 100, the wireless power transmitter 100 may inform the wireless power receiver 200 whether a foreign object has been detected. Methods that can be used for FOD in the power transfer phase may correspond to, for example, power loss calculations. In this approach, the wireless power transmitter 100 compares the received power level reported by the wireless power receiver 200 with the amount of transmitted power (transmitted power level) and it can send a signal (whether a foreign object has been monitored) to the wireless power receiver 200 when the difference exceeds a threshold.

### <Renegotiation phase>

If necessary depending on the situation, the wireless power transmitter 100 or the wireless power receiver 200 may request renegotiation of the power transfer contract during the power transfer phase. Examples of changed circumstances in which renegotiation of a power transfer contract may occur include:
- When the wireless power receiver 200 requires (substantially) more power than previously negotiated.
- When the wireless power transmitter 100 detects that it is operating at low efficiency.
- When the wireless power transmitter 100 can no longer maintain its current power level due to increased operating temperature (Or vice versa, i.e., when the wireless power receiver 200 can operate at a higher power level after sufficiently cooling).

Here, an example of a specific protocol for the renegotiation phase is the same as described above.

### <Data Transport Stream>

The wireless power transmitter 100 and the wireless power receiver 200 may start a data transmission stream and exchange application level data throughout the power transfer phase 840.

Here, an important common application is authentication, where each side can verify the other's credentials in a tamper-proof manner. For example, the wireless power receiver 200 may want to check the credentials of the wireless power transmitter 100 to ensure that the wireless power transmitter 100 can be trusted to operate safely at high power levels. Having the appropriate credentials can mean you have passed compliance testing.

Accordingly, the present specification may provide a method of starting power transfer at a low power level and controlling power to a higher level only after successfully completing the authentication protocol.

### <Protocol in power transfer phase 840>

So far, the operation between the wireless power transmitter 100 and the wireless power receiver 200 in the power transfer phase 840 has been briefly described. Hereinafter, for a smooth understanding of the operation in the power transfer phase 840, the protocol in the power transfer phase 840 will be described separately as a baseline protocol and an extended protocol.

FIG. 14 schematically shows a flow chart of the data flow for the power transfer phase 840 in the baseline protocol.

According to FIG. 14, the wireless power receiver 200 may transmit CE to the wireless power transmitter 100 (S1410). Here, the wireless power receiver 200 can generally transmit CE data packets several times per second.

The wireless power receiver 200 may generally transmit a received power (RP) data packet (RP8 in the baseline protocol) to the wireless power transmitter 100 once every 1.5 seconds (S1420).

Optionally, the wireless power receiver 200 may transmit a charge status (CHS) data packet to the wireless power transmitter 100 (S1430).

The data packet described above can be summarized and explained as follows.
- CE: CE data packets can provide feedback on the desired power level. CE data packets may include a control error value, here, the control error value may be a signed integer value that is a relative measurement value of the deviation between the actual operating point and the target operating point of the wireless power receiver 200. If the control error value at this time is a positive value, it indicates that the actual operating point is below the target operating point, the wireless power transmitter 100 may be requested to increase the power signal. If the control error value is a negative value, it indicates that the actual operating point is above the target operating point, the wireless power transmitter 100 may be requested to reduce the power signal.
- RP8: RP8 data packets can report the received power level. Here, RP8 data packets can only be included in the baseline protocol.
- CHS: CHS data packets can provide the charge level of the battery at the load.

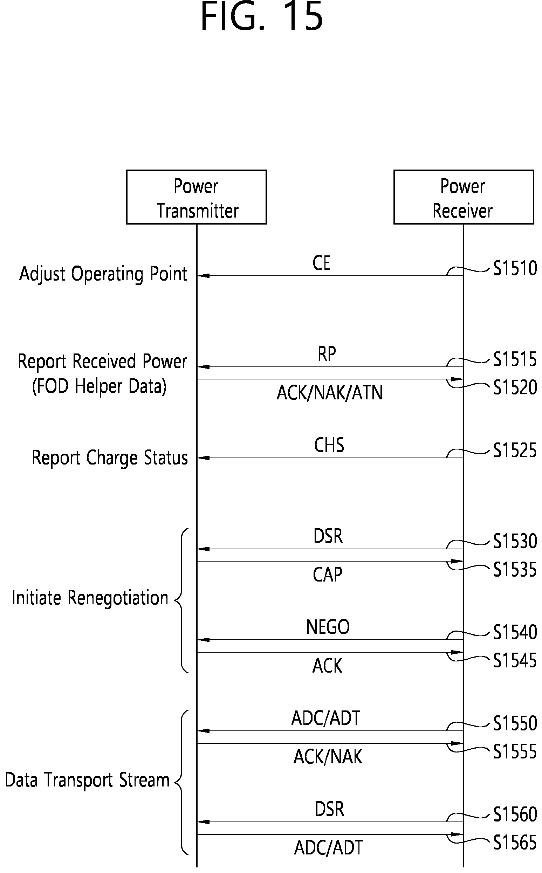

FIG. 15 schematically shows a flow chart of the data flow for the power transfer phase 840 in the extended protocol.

According to FIG. 15, the wireless power receiver 200 may transmit CE to the wireless power transmitter 100 (S1510). Here, the wireless power receiver 200 can generally transmit CE data packets several times per second.

The wireless power receiver 200 may generally transmit a received power (RP) data packet (RP in the extended protocol) to the wireless power transmitter 100 once every 1.5 seconds (S1515).

In the power transfer phase, control error packets (CE) and received power packets (RP) are data packets that must be repeatedly transmitted/received according to the required timing constraints to control wireless power.

The wireless power transmitter 100 can control the level of wireless power transmitted based on the control error packet (CE) and received power packet (RP) received from the wireless power receiver 200.

Meanwhile, in the extended protocol, the wireless power transmitter 100 may respond to the received power packet (RP) with a bit pattern such as ACK, NAK, or ATN (S1520).

The fact that the wireless power transmitter 100 responds with ACK to a received power packet (RP/0) with a mode value of 0 means that power transmission can continue at the current level.

When the wireless power transmitter 100 responds with NAK to a received power packet (RP/0) with a mode value of 0, this means that the wireless power receiver 200 must reduce power consumption.

For received power packets with a mode value of 1 or 2 (RP/1 or RP/2), when the wireless power transmitter 100 responds with ACK, this means that the wireless power receiver 200 has accepted the power correction value included in the received power packet (RP/1 or RP/2).

For received power packets with a mode value of 1 or 2 (RP/1 or RP/2), when the wireless power transmitter 100 responds with NAK, it means that the wireless power receiver 200 did not accept the power correction value included in the received power packet (RP/1 or RP/2).

The received power packet (RP/1) with a mode value of 1 described above may mean the first calibration data point, a received power packet (RP/2) with a mode value of 2 may mean an additional calibration data point. Here, the wireless power receiver may transmit a received power packet (RP/2) with a mode value of 2 to the wireless power transmitter multiple times to transmit a plurality of additional power calibration values, the wireless power transmitter can proceed with a calibration procedure based on the received RP/1 and multiple RP/2.

When the wireless power transmitter 100 responds with ATN to the received power packet (RP), it means that the wireless power transmitter 100 requests permission for communication. That is, the wireless power transmitter 100 may transmit an attention (ATN) response pattern to request permission to transmit a data packet in response to an RP data packet. In other words, the wireless power transmitter 100 may transmit an ATN to the wireless power receiver 200 in response to the RP data packet and request the wireless power receiver 200 for permission to transmit the data packet.

Optionally, the wireless power receiver 200 may transmit a charge status (CHS) data packet to the wireless power transmitter 100 (S1525).

Meanwhile, the wireless power transmitter 100 and the wireless power receiver 200 can exchange data stream response (DSR) data packets, CAP data packets, and NEGO data packets to initiate renegotiation of elements of the power transfer contract (typically guaranteed load power).

For example, the wireless power receiver 200 transmits a DSR data packet to the wireless power transmitter 100 (S1530), the wireless power transmitter 100 may transmit a CAP to the wireless power receiver 200 (S1535).

In addition, the wireless power receiver 200 transmits a NEGO data packet to the wireless power transmitter 100 (S1540), the wireless power transmitter 100 may transmit an ACK to the wireless power receiver 200 in response to the NEGO data packet (S1545).

Here, the data packets related to the start of the renegotiation phase can be summarized as follows.
- DSR: Any one of the following values can be set in the DSR data packet.
   i) 0x00-DSR/nak: Indicates that the last received data packet of the wireless power transmitter 100 was rejected.
   ii) 0x33-DSR/poll: Invite the wireless power transmitter 100 to send a data packet.
   iii) 0x55-DSR/nd: Indicates that the last received data packet from the wireless power transmitter 100 was not expected.
   iv) 0xFF-DSR/ack: Confirms that the last received data packet of the wireless power transmitter 100 has been properly processed.
- CAP: The CAP data packet provides information about the function of the wireless power transmitter 100. The specific details are the same as described previously.
- NEGO: NEGO data packets may request the wireless power transmitter 100 to proceed to the re-negotiation phase.

The wireless power transmitter 100 and the wireless power receiver 200 may use auxiliary data transport (ADC), auxiliary data transport (ADT), and DSR data packets to exchange application level data.

That is, from the perspective of transmission and reception of a data transmission stream for exchange of application-level data, the wireless power receiver 200 may transmit ADC/ADT to the wireless power transmitter 100 (S1550), the wireless power transmitter 100 may transmit an ACK/NAK to the wireless power receiver 200 in response (S1555). In addition, the wireless power receiver 200 can transmit DSR to the wireless power transmitter 100 (S1560), the wireless power transmitter may transmit ADC/ADT to the wireless power receiver (S1565).

Here, the data transport stream serves to transfer application-level data from the data stream initiator to the data stream responder. Additionally, application level data can be broadly divided into i) authentication applications, and ii) proprietary (general purpose) applications.

Among application level data, messages/information related to the authentication application can be organized as follows.

The message used in the authentication procedure is called an authentication message. Authentication messages are used to convey information related to authentication. There are two types of authentication messages. One is an authentication request, and the other is an authentication response. An authentication request is sent by an authentication initiator, and an authentication response is sent by an authentication responder. The wireless power transmitting device and receiving device can be an authentication initiator or an authentication responder. For example, if the wireless power transmitting device is the authentication initiator, the wireless power receiving device becomes the authentication responder, and if the wireless power receiving device is the authentication initiator, the wireless power transmitting device becomes the authentication responder.

Authentication request messages include GET_DIGESTS, GET_CERTIFICATE, and CHALLENGE.
- GET_DIGESTS: This request can be used to retrieve certificate chain digests. The wireless power receiver 200 can request a desired number of digests at a time.
- GET_CERTIFICATE: This request can be used to read segments of the target certificate chain.
- CHALLENGE: This request can be used to initiate authentication of a power transmitter product device.

The authentication response message includes DIGESTS, CERTIFICATE, CHALLENGE_AUTH, and ERROR.
- DIGESTS: The wireless power transmitter 100 can send a certificate chain summary using the DIGESTS response and report slots containing a valid certificate chain summary.
- CERTIFICATE: This response can be used by the wireless power transmitter 100 to send the requested segment of the certificate chain.
- CHALLENGE_AUTH: The wireless power transmitter 100 can respond to the CHALLENGE request using CHALLENGE_AUTH.
- ERROR: This response can be used to transmit error information from the power transmitter.

The authentication message may be called an authentication packet, authentication data, or authentication control information. Additionally, messages such as GET_DIGEST and DIGESTS may also be called GET_DIGEST packets, DIGEST packets, etc.

Meanwhile, as described above, the wireless power receiver 200 and the wireless power transmitter 100 can transmit application level data through a data transmission stream. Application-level data transmitted through a data transport stream may consist of a data packet sequence with the following structure.
- Initial ADC data packet that opens the stream.
   i) Types of messages contained in the stream.
   ii) Number of data bytes in the stream.
- A series of ADT data packets containing the actual message.
- The final ADC/end data packet that closes the stream.

Hereinafter, the data transport stream for an example in which the above ADC, ADT, and ADC/end data packets are used will be described using the drawings.

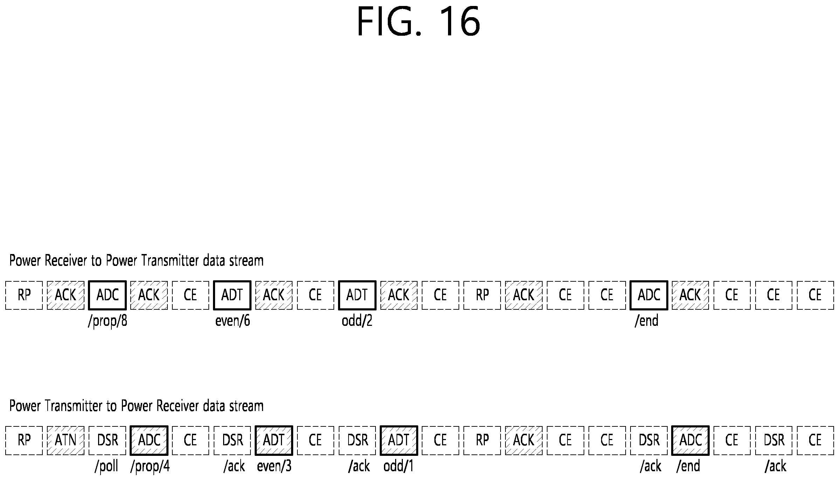

FIG. 16 illustrates an application-level data stream between the wireless power transmitter 100 and the wireless power receiver 200 according to an example.

Referring to FIG. 16, the data stream may include auxiliary data control (ADC) data packets and/or auxiliary data transport (ADT) data packets.

ADC data packets are used to open a data stream. ADC data packets can indicate the type of message included in the stream and the number of data bytes. On the other hand, ADT data packets are sequences of data containing the actual message. ADC/end data packets are used to signal the end of a stream. For example, the maximum number of data bytes in a data transport stream may be limited to 2047.

ACK or NAC (NACK) is used to notify whether ADC data packets and ADT data packets are normally received. Between the transmission timing of the ADC data packet and the ADT data packet, control information necessary for wireless charging, such as a control error packet (CE) or DSR, may be transmitted.

Using this data stream structure, authentication-related information or other application-level information can be transmitted and received between a wireless power transmitter and a receiver.

An example for understanding the operation between the wireless power transmitter 100 and the wireless power receiver 200 in the power transfer phase 840 described above may be as follows.

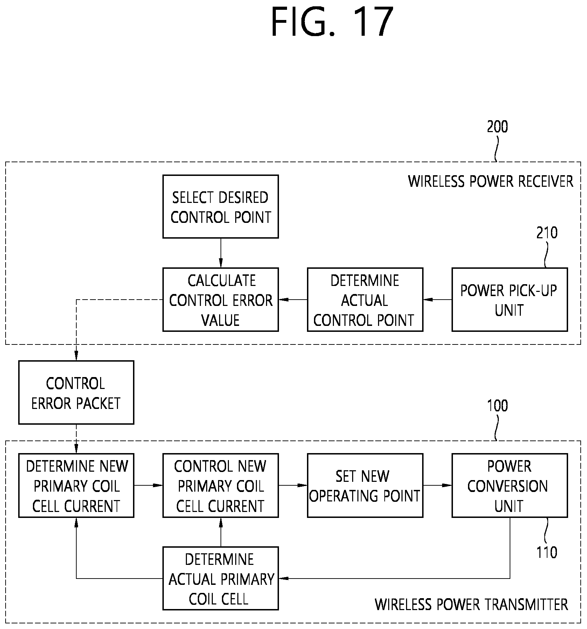

FIG. 17 shows a power control method according to one embodiment.

In the power transfer phase in FIG. 17, the wireless power transmitter 100 and the wireless power receiver 200 can control the amount of power transferred by performing communication along with power transmission and reception. The wireless power transmitter and wireless power receiver operate at a specific control point. The control point represents the combination of voltage and current provided from the output of the wireless power receiver when power transfer is performed.

More specifically, the wireless power receiver selects a desired control point, a desired output current/voltage, a temperature at a specific location of the mobile device, and so on, and additionally determines an actual control point at which the receiver is currently operating. The wireless power receiver calculates a control error value by using the desired control point and the actual control point, and, then, the wireless power receiver may transmit the calculated control error value to the wireless power transmitter as a control error packet.

Also, the wireless power transmitter may configure/control a new operating point - amplitude, frequency, and duty cycle - by using the received control error packet, so as to control the power transfer. Therefore, the control error packet may be transmitted/received at a constant time interval during the power transfer phase, and, according to the exemplary embodiment, in case the wireless power receiver attempts to reduce the electric current of the wireless power transmitter, the wireless power receiver may transmit the control error packet by setting the control error value to a negative number. And, in case the wireless power receiver intends to increase the electric current of the wireless power transmitter, the wireless power receiver transmit the control error packet by setting the control error value to a positive number. During the induction mode, by transmitting the control error packet to the wireless power transmitter as described above, the wireless power receiver may control the power transfer.

In the resonance mode, the device may be operated by using a method that is different from the induction mode. In the resonance mode, one wireless power transmitter should be capable of serving a plurality of wireless power receivers at the same time. However, in case of controlling the power transfer just as in the induction mode, since the power that is being transferred is controlled by a communication that is established with one wireless power receiver, it may be difficult to control the power transfer of additional wireless power receivers. Therefore, in the resonance mode according to the present disclosure, a method of controlling the amount of power that is being received by having the wireless power transmitter commonly transfer (or transmit) the basic power and by having the wireless power receiver control its own resonance frequency. Nevertheless, even during the operation of the resonance mode, the method described above in FIG. 17 will not be completely excluded. And, additional control of the transmitted power may be performed by using the method of FIG. 17.

### Hereinafter, this specification will be described in more detail.

Wireless charging methods include a magnetic induction method using a magnetic induction phenomenon between a primary coil and a secondary coil, and a magnetic resonance method in which magnetic resonance is achieved using a frequency in a band of several tens of kHz to several MHz to transmit power. Here, the wireless charging standard for the magnetic resonance method is led by a conference called A4WP, and the magnetic induction method is led by the WPC (Wireless Power Consortium). Here, the WPC is designed to exchange various status information and commands related to the wireless charging system in-band.

The standards in WPC define a baseline power profile (BPP) and an extended power profile (EPP). Hereinafter, BPP and EPP will be described respectively.

### A. Baseline power profile (BPP)

BPP relates to a power transfer profile between a wireless power transmitter and receiver that supports power transfer of up to 5W. And, in BPP, unidirectional communication from a wireless power receiver to a wireless power transmitter is supported. The communication method at this time may correspond to ASK (amplitude shift keying). In BPP, there may be protocol phases of ping, configuration, and power transfer.

### B. Extended power profile (EPP)

EPP relates to a power transfer profile between a wireless power transmitter and receiver that supports power transfer of up to 15W. And, in EPP, bidirectional communication between a wireless power receiver and a wireless power transmitter is supported. The communication method from the wireless power receiver to the wireless power transmitter may correspond to ASK (amplitude shift keying), the communication method from the wireless power transmitter to the wireless power receiver may correspond to frequency shift keying (FSK). In EPP, there may be protocol phases of ping, setup, negotiation, and power transfer.

### (a) Compatibility in EPP

EPP may correspond to a higher profile of BPP.

For example, if a BPP wireless power receiver is placed on an EPP wireless power transmitter, the EPP wireless power transmitter can operate as a BPP wireless power transmitter.

For example, if the EPP wireless power receiver is placed on a BPP wireless power transmitter, the EPP wireless power receiver can operate as a BPP wireless power receiver.

In other words, EPP can maintain compatibility with BPP.

### (b) EPP indication method of EPP wireless power receiver

The EPP wireless power receiver can indicate that it is an EPP wireless power receiver by setting the 'neg' bit in the configuration packet (i.e. CFG) to 1. Specific examples of configuration packets are as described above.

### (c) EPP indication method of EPP wireless power transmitter

When the EPP wireless power transmitter receives a configuration packet with the 'neg' bit set to 1 from the wireless power receiver, the EPP wireless power transmitter may respond to the wireless power receiver with an ACK FSK bit pattern.

For reference, as previously explained, the BPP wireless power transmitter does not support the FSK communication method, so the BPP wireless power transmitter cannot transmit FSK bit patterns. Accordingly, by not receiving the above ACK response, the EPP wireless power receiver, which sets the 'neg' bit to 1 and transmits a configuration packet to the BPP wireless power transmitter, can identify the other wireless power transmitter as a BPP wireless power transmitter.

Meanwhile, the wireless power transfer system seeks to provide a new power transfer profile, among the power transfer profiles proposed at this time, there is MPP (magnetic power profile). MPP may correspond to a proprietary extension from Apple based on Qi v1.3.0.

### C. Magnet power profile (MPP)

MPP relates to a power transfer profile between a wireless power transmitter and receiver that supports power transfer of up to 15W. And, in MPP, bidirectional communication between a wireless power receiver and a wireless power transmitter is supported. The communication method from the wireless power receiver to the wireless power transmitter may correspond to ASK (amplitude shift keying), the communication method from the wireless power transmitter to the wireless power receiver may correspond to frequency shift keying (FSK). At this time, fast FSK (NCYCLE = 128) can be used during the negotiation and power transfer phase.

In MPP, there may be protocol phases of ping, configuration, MPP negotiation, and MPP power transfer.

### (a) Compatibility in MPP

MPP may correspond to a higher profile of BPP.

For example, if a BPP wireless power receiver is placed on an MPP wireless power transmitter, the MPP wireless power transmitter can operate as a BPP wireless power transmitter.

For example, if the MPP wireless power receiver is placed on a BPP wireless power transmitter, the MPP wireless power receiver can operate as a BPP wireless power receiver.

In other words, MPP can maintain compatibility with BPP.

### (b) MPP operation of MPP wireless power receiver (MPP instruction method)

The MPP wireless power receiver may use a specific MPP indicator within the extended ID packet.

In order for the MPP wireless power receiver to indicate whether MPP is supported through XID, the wireless power receiver must inform the wireless power transmitter that the XID is transmitted through an ID packet. The ID packet transmitted by the MPP wireless power receiver may be as follows.

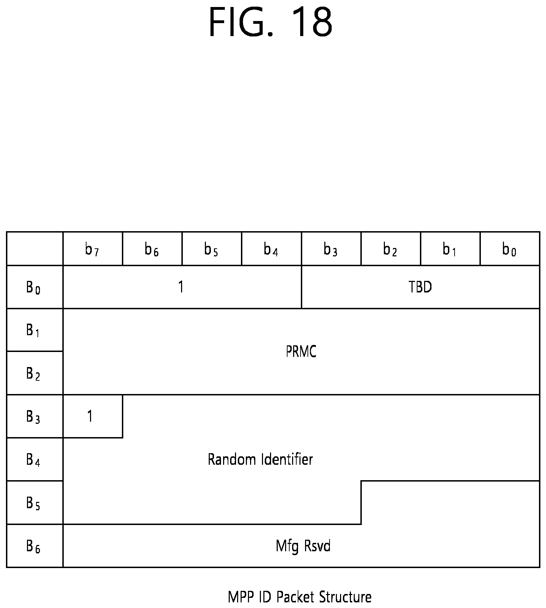

FIG. 18 schematically shows the structure of an MPP ID packet.

According to FIG. 18, in the MPP ID packet, the value of the major version field from b4 to b7 of B0 may be set to 1.

In the MPP ID packet, the value of the minor version field from b0 to b3 of B0 may be a value to be determined later.

In the MPP ID packet, the values of the manufacturer codes of B1 and B2 may be assigned as PRMC codes.

In the MPP ID packet, the value of the 'ext' field of b7 of B3 may be set to 1 to indicate that an XID packet is additionally transmitted.

In the MPP ID packet, the values of the random identifier fields of b0 to b6 of B3 and b3 to b7 of B4 and B5 may be set according to a random device identification policy.

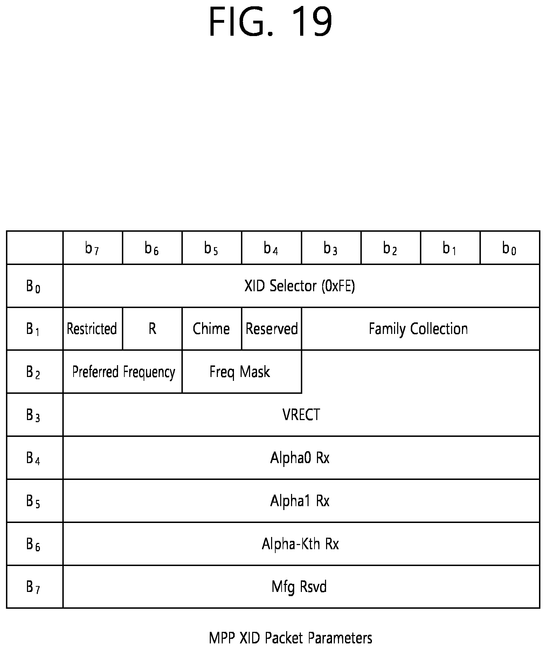

FIG. 19 schematically shows an example of an XID packet in MPP.

According to FIG. 19, an XID packet in MPP may include an 'XID Selector' field, a 'Restricted' field, and a 'Freq Mask' field.

Here, whether MPP is supported can be determined depending on whether the value of 'XID selector' is 0xFE. That is, if the value of B_0 of the XID is 0xFE, the XID at this time may correspond to information indicating that the wireless power receiver supports MPP.

The 'Restricted' field may correspond to information indicating whether the wireless power receiver operates in MPP restricted mode or MPP full mode. If the wireless power receiver selects to operate in MPP limited mode, the above field can be set to 1. Meanwhile, in other cases (e.g., when the wireless power receiver selects not to operate in MPP limited mode), the above field may be set to 0.

The 'Preferred Frequency' field may mean the MPP preferred frequency. Here, if the wireless power receiver wishes to retrieve information from the wireless power transmitter before switching the frequency (in the negotiation phase), this field can be set to 128 kHz. Otherwise, the wireless power receiver can set this field to 360 kHz.

The 'Freq Mask' field corresponds to a field for determining whether the operating frequency of 360 kHz is supported. That is, if the 'Freq Mask' field is set to 0, 360kHz is supported.

In summary, the wireless power transmitter determines whether the 'Ext' bit of the ID received from the wireless power receiver is set to 1 and determines whether B_0 of the XID is set to 0xFE, the wireless power transmitter can determine whether the wireless power receiver supports MPP.

### (c) MPP operation of MPP wireless power transmitter (MPP instruction method)

After detecting the placement of a wireless power receiver on the charging surface, the MPP wireless power transmitter can use the information contained in the ID and XID packets to perform a digital ping and identify the receiver.

Here, the wireless power transmitter may determine that the wireless power receiver supports MPP if all of the following conditions are met.
- Qi version: The Qi protocol version of the ID packet is set to (Major=1, Minor=TBD) or higher.
- MPP support notification: The subheader (byte 0) of the XID packet is set to the MPP selector.

If the above two conditions are not satisfied, the wireless power transmitter can proceed with subsequent procedures according to the Qi v1.3 specification.

Meanwhile, according to the MPP operation mode requested by the MPP wireless power receiver in the XID packet, the wireless power transmitter performs the following.
- Restricted profile activation (MPP restricted mode): When the 'restricted' flag is set to 1.
- Full profile activation (MPP full mode): when the 'restricted' flag is set to 0.

Specific examples of the above limited profile and full profiles will be described later.

Meanwhile, when the MPP wireless power transmitter receives a configuration packet with the 'neg' bit set to 1 from the wireless power receiver, the MPP wireless power transmitter (in MPP full mode) may respond to this to the wireless power receiver with an MPP ACK FSK bit pattern.

For reference, the wireless power transmitter in MPP restricted mode does not support the FSK communication method, so the wireless power transmitter in MPP restricted mode cannot transmit FSK bit patterns. However, because the wireless power transmitter in MPP restricted mode uses a 360 kHz operation signal to transmit power, accordingly, the MPP wireless power receiver setting the 'neg' bit to 1 and transmitting the configuration packet to the wireless power transmitter operating in MPP restricted mode allows the other wireless power transmitter to be identified as an MPP restricted mode wireless power transmitter through the operating frequency.

### (d) Mode of MPP

Meanwhile, two modes may exist in MPP. One of them is MPP restricted mode (MPP Restricted mode) (in other words, MPP baseline profile), and the other one is MPP Full mode (in other words, MPP full profile).

To briefly explain the difference between the two, in MPP restricted mode, the 'restricted' field in the XID is set to 1, but in MPP full mode, the 'restricted' field in the XID is set to 0.

Additionally, FSK communication is not supported in MPP restricted mode, but FSK communication can be supported in MPP full mode.

Additionally, since FSK communication is not supported in MPP restricted mode, MPP ACK for CFG cannot be transmitted, accordingly, MPP negotiation is not supported in MPP restricted mode. On the other hand, in MPP full mode, FSK communication is supported, so MPP ACK for CFG can be transmitted, accordingly, MPP negotiation can be supported in MPP full mode.

Below, MPP restricted mode and MPP full mode will be described in more detail. Here, MPP restricted mode can be mixed with the MPP baseline profile, and MPP full mode can be mixed with the MPP full profile.

Below, for a better understanding of MPP restricted mode and MPP full mode, the protocols in each mode will be explained in more detail.

### i) MPP restricted mode

As explained previously, FSK communication is not supported in MPP restricted mode. That is, in MPP restricted mode, there may be no data packets transmitted from the wireless power transmitter to the wireless power receiver. Against this background, the protocol in MPP restricted mode will be explained through drawings.

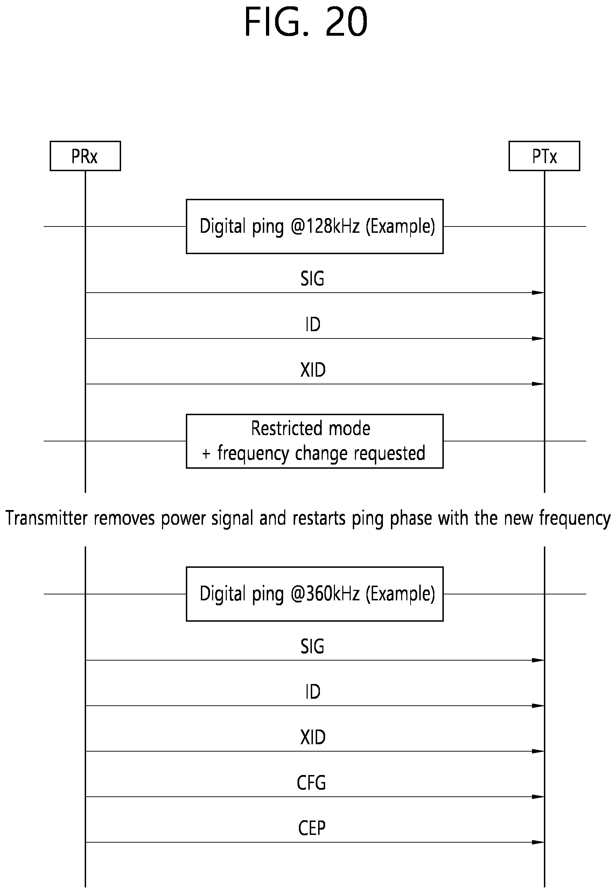

FIG. 20 schematically shows the protocol in MPP restricted mode.

According to FIG. 20, the wireless power receiver may transmit a SIG to the wireless power transmitter on a first operating frequency (e.g., 128 kHz). At this time, the first operating frequency may correspond to an operating frequency at which BPP and/or EPP can be performed. And, the first operating frequency at this time corresponds to the frequency at which the wireless power transmitter operates.

The wireless power receiver may transmit an ID packet to the wireless power transmitter on a first operating frequency. At this time, since the XID is always transmitted in MPP, the 'ext' bit of the ID may be set to 1 to indicate that the XID is additionally transmitted.

The wireless power receiver may transmit an XID packet to the wireless power transmitter on a first operating frequency.

At this time, the value of B0 in the XID may be 0xFE, and if the value of B0 in the XID is set to 0xFE, this may correspond to information indicating that the wireless power receiver supports MPP. In addition, the 'Restricted' field in the XID at this time may be set to 1 to indicate that the wireless power receiver operates in MPP restricted mode.

Here, when the wireless power transmitter receives the above XID packet indicating MPP restricted mode, the wireless power transmitter may remove the power signal and restart the ping phase at a new operating frequency.

When the ping phase is restarted, the wireless power receiver begins transmitting the SIG again. However, the operating frequency at this time may be a second operating frequency (e.g., 360 kHz).

Thereafter, the wireless power receiver transmits ID, XID, and CFG packets to the wireless power transmitter at the second operating frequency, respectively. In addition, the wireless power receiver can receive wireless power based on the MPP baseline from the wireless power transmitter by transmitting a CEP to the wireless power transmitter.

### ii) MPP full mode

As described previously, FSK communication can be supported in MPP full mode. That is, in MPP full mode, there may be data packets transmitted from the wireless power transmitter to the wireless power receiver. In other words, MPP negotiation, etc. may be conducted between a wireless power transmitter and a wireless power receiver. Against this background, the protocol in MPP full mode will be explained through the drawings.

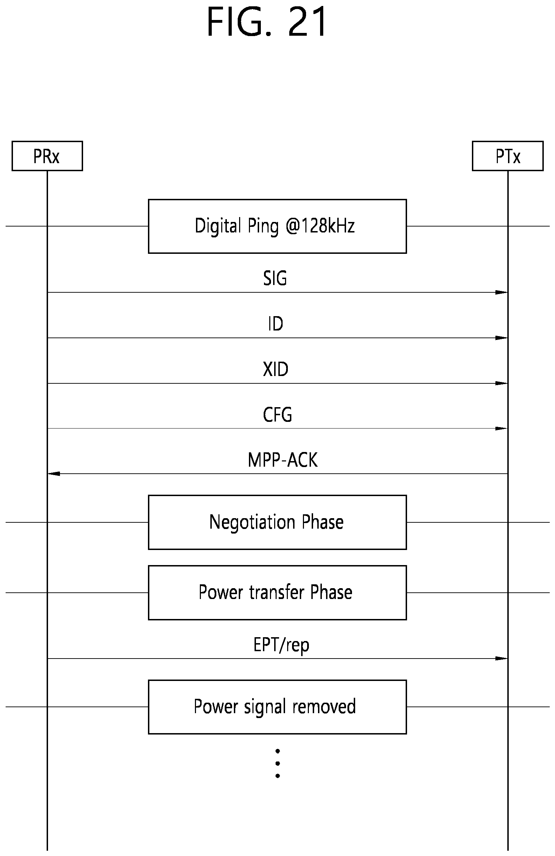

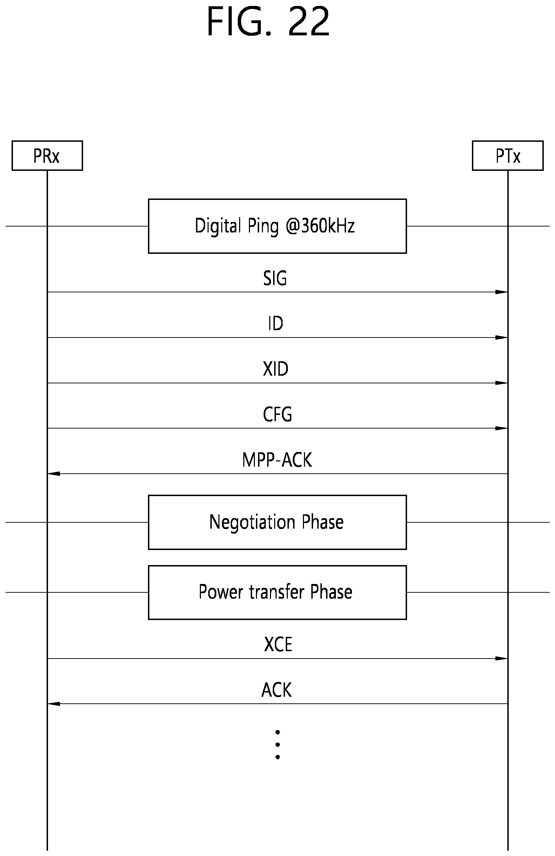

FIGS. 21 and 22 schematically show the protocol in MPP full mode.

First, according to FIG. 21, the wireless power receiver may transmit a SIG to the wireless power transmitter on a first operating frequency (e.g., 128 kHz). At this time, the first operating frequency may correspond to an operating frequency at which BPP and/or EPP can be performed. And, the first operating frequency at this time corresponds to the frequency at which the wireless power transmitter operates.

The wireless power receiver may transmit an ID packet to the wireless power transmitter on a first operating frequency. At this time, since the XID is always transmitted in MPP, the 'ext' bit of the ID may be set to 1 to indicate that the XID is additionally transmitted.

The wireless power receiver may transmit an XID packet to the wireless power transmitter on a first operating frequency.

At this time, the value of B0 in the XID may be 0xFE, and if the value of B0 in the XID is set to 0xFE, this may correspond to information indicating that the wireless power receiver supports MPP. In addition, the 'Restricted' field in the XID at this time may be set to 0 to indicate that the wireless power receiver operates in MPP full mode.

Meanwhile, in MPP full mode, unlike MPP restricted mode, the power signal is not removed even if the wireless power transmitter receives an XID packet from the wireless power receiver. At this time, since the power signal has not yet been removed, the wireless power receiver transmits a CFG packet to the wireless power transmitter after the XID packet.

And, the wireless power receiver can receive an MPP ACK from the wireless power transmitter as a response to the above CFG packet.

The wireless power receiver that receives the MPP ACK enters a negotiation phase with the wireless power transmitter, and both the wireless power receiver and the wireless power transmitter can proceed with negotiation.

After negotiation progresses, the wireless power receiver may enter a power transfer phase with the wireless power transmitter.

Meanwhile, the wireless power receiver transmits an EPT packet to the wireless power transmitter. The wireless power transmitter that receives the EPT packet removes the power signal and can then restart the ping phase at a new operating frequency.

According to FIG. 22, when the ping phase is restarted, the wireless power receiver starts again from transmitting the SIG. However, the operating frequency at this time may be a second operating frequency (e.g., 360 kHz).

Thereafter, the wireless power receiver transmits ID, XID, and CFG packets to the wireless power transmitter at the second operating frequency, respectively. And, the wireless power receiver can receive the MPP ACK from the wireless power transmitter.

The wireless power receiver that receives the MPP ACK enters a negotiation phase with the wireless power transmitter at the second operating frequency, and both the wireless power receiver and the wireless power transmitter can proceed with negotiation.

After negotiation, the wireless power receiver enters a power transfer phase with the wireless power transmitter at the second operating frequency. In addition, the wireless power receiver may receive wireless power based on the MPP full mode from the wireless power transmitter by transmitting an XCE to the wireless power transmitter and responding (e.g., receiving an ACK).

### Hereinafter, this specification will be described in more detail.

The current WPC Qi specification provides an authentication function. Here, authentication can proceed as follows.

Regarding authentication, the wireless power receiver can become an initiator and transmit (request) an authentication request to the wireless power transmitter. In this case, the wireless power transmitter becomes a responder, and the wireless power transmitter transmits an authentication response to the request from the wireless power receiver to the wireless power receiver. Through this, the wireless power receiver can authenticate the wireless power transmitter.

Below, data for authentication is described.

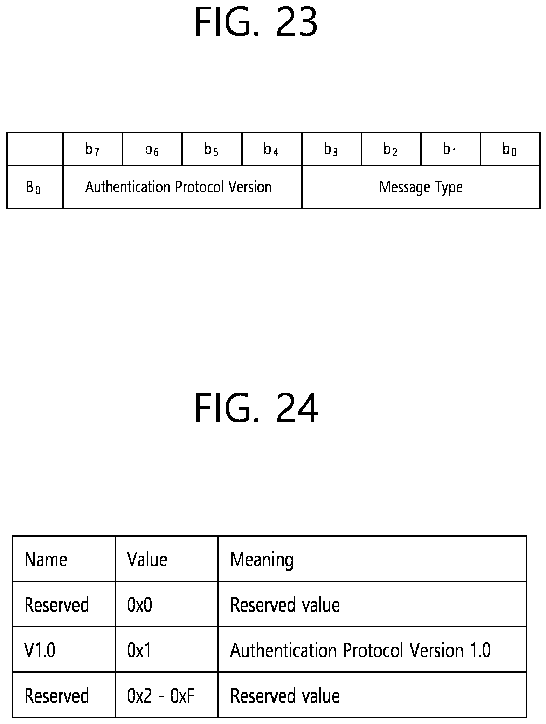

FIG. 23 illustrates an example of an authentication message header.

According to Figure 23, all messages related to authentication have a header, and the authentication message header may include an authentication protocol version field and a message type field.

FIG. 24 illustrates an example of an authentication protocol version field.

According to FIG. 24, the authentication protocol version field may have a value from 0x0 to 0xF. At this time, if the value of the authentication protocol version field is 0x0, this may mean a reserved value. If the value of the authentication protocol version field is 0x1, this may mean authentication protocol version 1.0. If the value of the authentication protocol version field is 0x2 to 0xF, this may mean a reserved value.

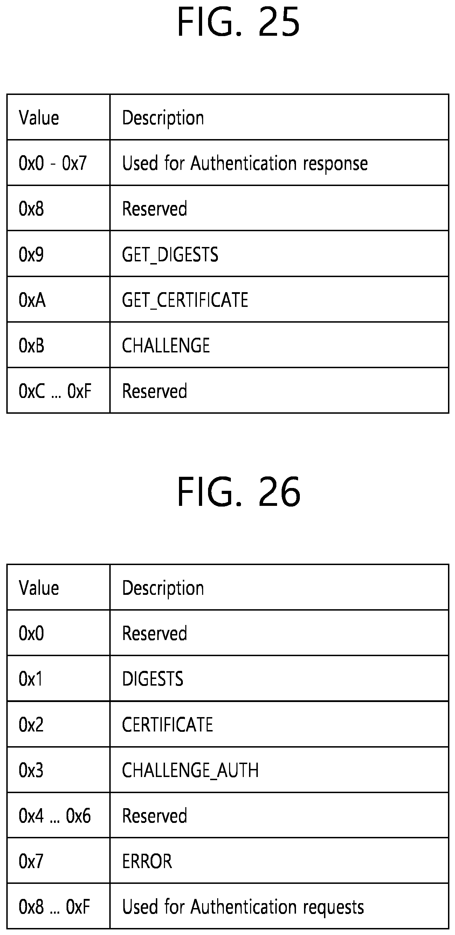

FIG. 25 illustrates an example of a message type field for an authentication request.

According to FIG. 25, if the value of the message type field is 0x0 to 0x7, this is a value used for authentication response. If the value of the message type field is 0x8, this may mean a reserved value. If the value of the message type field is 0x9, this may mean GET_DIGESTS. If the value of the message type field is 0xA, this may mean GET_CERTIFICATE. If the value of the message type field is 0xB, this may mean CHALLENGE. If the value of the message type field is 0xC to 0xF, this may mean a reserved value.

FIG. 26 illustrates an example of a message type field for an authentication response.

According to Fig. 26, if the value of the message type field is 0x0, this may mean a reserved value. If the value of the message type field is 0x1, this may mean DIGESTS. If the value of the message type field is 0x2, this may mean CERTIFICATE. If the value of the message type field is 0x3, this may mean CHALLENGE_AUTH. If the value of the message type field is 0x4 to 0x6, this may mean a reserved value. If the value of the message type field is 0x7, this may mean ERROR. If the value of the message type field is 0x8 to 0xF, this is a value used for an authentication request.

First, the authentication request message sent by the wireless power receiver is composed of GET_DIGESTS/GET_CERTIFICATE/CHALLENGE.

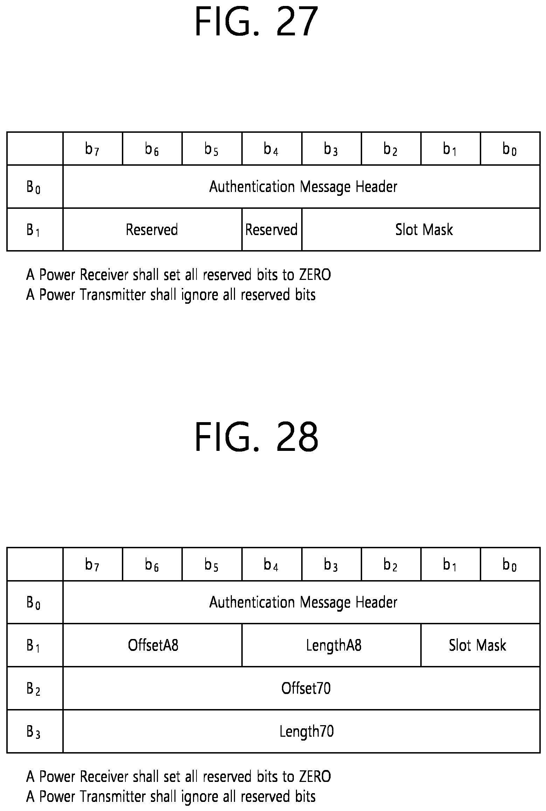

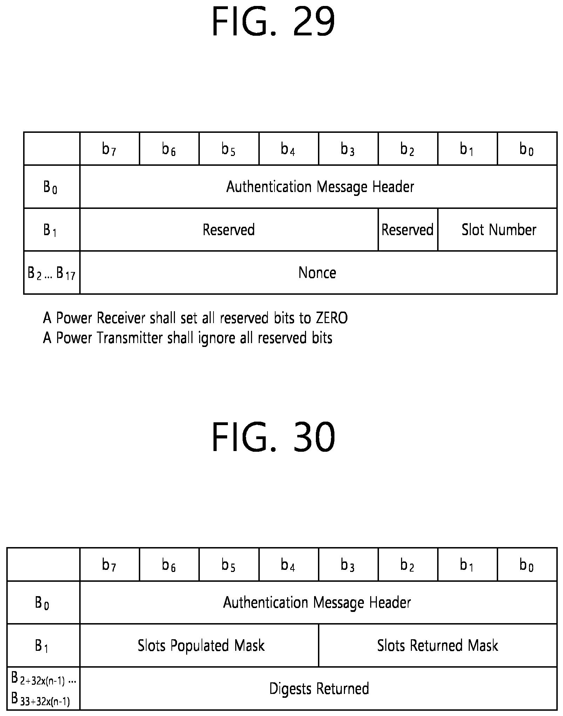

FIG. 27 illustrates an example of GET_DIGESTS. FIG. 28 illustrates an example of GET_CERTIFICATE. FIG. 29 illustrates an example of CHALLENGE.

In summary, the authentication request message includes GET_DIGESTS, GET_CERTIFICATE, and CHALLENGE.
- GET_DIGESTS: This request may be used to retrieve a certificate chain digest. The wireless power receiver (200) can request as many digests as desired at one time.
- GET_CERTIFICATE: This request may be used to read a segment of the target certificate chain.
- CHALLENGE: This request may be used to initiate authentication of the power transmitter product device.

The authentication response message sent by the wireless power transmitter contains DIGESTS/CERTIFICATE/CHALLENGE_AUTH. Additionally, the authentication response message may contain ERROR.

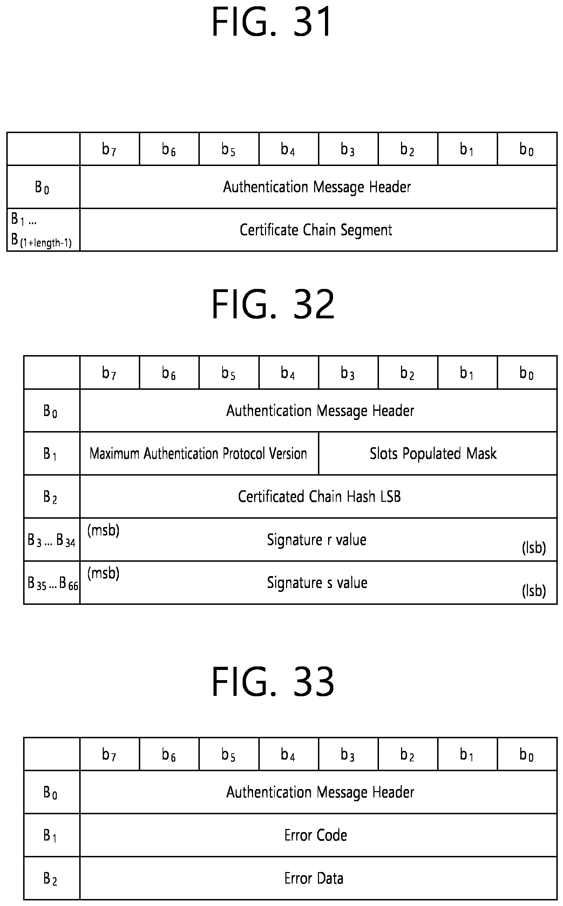

FIG. 30 illustrates an example of DIGESTS. FIG. 31 illustrates an example of CERTIFICATE. FIG. 32 illustrates an example of CHALLENGE_AUTH. FIG. 33 illustrates an example of ERROR.

In summary, the authentication response message includes DIGESTS, CERTIFICATE, CHALLENGE_AUTH, and ERROR.
- DIGESTS: The wireless power transmitter (100) may send a certificate chain summary using the DIGESTS response and report a slot containing a valid certificate chain summary.
- CERTIFICATE: This response may be used for the wireless power transmitter (100) to send a requested segment of the certificate chain.
- CHALLENGE_AUTH: The wireless power transmitter (100) may respond to a CHALLENGE request using CHALLENGE_AUTH.
- ERROR: This response may be used to transmit error information from the power transmitter.

As described above, a new feature, Authentication, has been added to the wireless charging standard, WPC Qi. Authentication is a procedure to verify whether the counterpart device has actually been certified by Qi, and is a very important method for verifying the presence or absence of a standard product.

In the current specification, authentication is performed upon request of PRx, and this function is an optional configuration, not a mandatory function. In order to perform the authentication function, the PTx sends an authentication response to the authentication request transmitted by PRx, thereby allowing the PRx to check whether PTx is Qi-certified.

The following drawings are created to explain specific examples of this specification. The names of specific devices or names of specific signals/messages/fields described in the drawings are presented as examples, and therefore, the technical features of this specification are not limited to the specific names used in the following drawings.

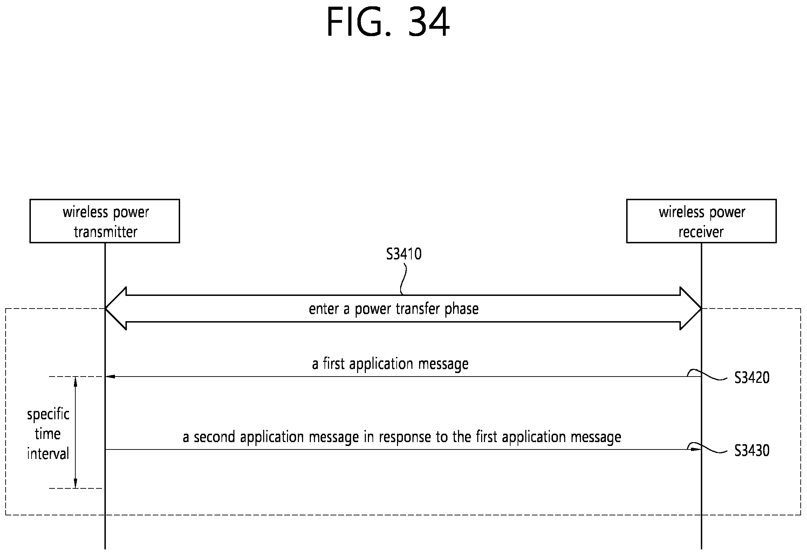

FIG. 34 is a flowchart of a method for transferring wireless power according to one embodiment of the present disclosure.

According to FIG. 34, the wireless power transmitter may enter a power transfer phase related to transferring wireless power (S3410).

As described above, the power transfer phase (840) is a part of the protocol in which actual power is transferred to the load of the wireless power receiver (200). Here, the power transfer may proceed according to the terms of the power transfer contract generated in the negotiation phase (830).

The wireless power transmitter (100) and the wireless power receiver (200) may initiate a data transmission stream to exchange application level data throughout the power transfer phase (840).

Here, an important common application is authentication, where both parties can verify the credentials of the other party in a tamper-proof manner. For example, a wireless power receiver (200) may want to verify the credentials of a wireless power transmitter (100) to ensure that the wireless power transmitter (100) can be trusted to operate safely at high power levels. Having the appropriate credentials may indicate that it has passed compliance testing.

Therefore, the present disclosure provides a method to initiate power transfer at a low power level and control power to a higher level only after successfully completing the authentication protocol.

Specific examples of power transfer phases are as described above.

The wireless power transmitter can receive a first application message from the wireless power receiver in the power transfer phase (S3420).

Here, as described above, the first application message can be transmitted via a data transport stream (data stream).

As described above, the data stream can include an auxiliary data control (ADC) data packet and/or an auxiliary data transport (ADT) data packet.

The ADC data packet is used to open the data stream. The ADC data packet can indicate the type of message included in the stream and the number of data bytes. On the other hand, the ADT data packet is a sequence of data containing an actual message. The ADC/end data packet is used to indicate the end of the stream.

In the power transfer phase, a second application message, which is a response to the first application message, can be transmitted to the wireless power receiver.

As described above, the second application message may also be transmitted via a data transport stream (data stream). The specific description of the data transport stream is as described above.

Here, it is described that the application message exchanged between the wireless power transmitter and the wireless power receiver may be an authentication request message or an authentication response message.

For example, if the first application message is an authentication request message, the first application message may correspond to, for example, GET_DIGESTS/GET_CERTIFICATE/CHALLENGE. For example, if the second application message is an authentication response message, the second application message may correspond to DIGESTS/CERTIFICATE/CHALLENGE_AUTH.

At this time, the wireless power transmitter may initiate transmission of the second application message within a specific time interval. And, the start point of the specific time interval may be the end point of the first application message.

Here, if the first application message is, for example, GET_DIGESTS, and the second application message is, for example, DIGESTS, then the specific time interval at this time can be t_DigestReady. And, the value of t_DigestReady can correspond to, for example, 3 seconds. Additionally, t_DigestTimeout can correspond to 43 seconds.

In this case, the TPR can be configured to send multiple RP/0 packets (for example, 3-4 times per second). This allows the wireless power transmitter to have multiple opportunities to respond within 3 seconds after receiving the GET_DIGESTS.

Here, the timing convention of t_DigestReady can be, for example, as follows. Examples of the timing convention below are described in more detail in the examples that follow.
- Start of t_DigestReady: From the start of the ADC/end packet (for GET_DIGEST) of the TPR
- End of t_DigestReady: Until the start of the ATN response of the power transmitter product. (If the wireless power transmitter generates a DIGESTS response, the message type can be 0x1 in the authentication message header.)

Hereinafter, the timing requirements of the wireless power transmitter are described in more detail. The examples described below correspond to more specifically describing the example in FIG. 34. Therefore, it is self-evident that the contents described below can all be applied to the example in FIG. 34.

### <Technical Problem to be Achieved by the Disclosure>

This specification proposes a method for power control/power transmission by a wireless power transmitter (PTx) during fast charging and normal charging.

That is, this specification proposes a method in which, before directly performing power control/power transmission from a wireless power transmitter (PTx) to a wireless power receiver (PRx), the PTx checks the status of the PRx and then performs power control. As a result, it is possible to move away from the current system in which power is received by the PRx, and the PTx directly transmits and controls power, and checks the status from the PRx in between to enable stable transmission.

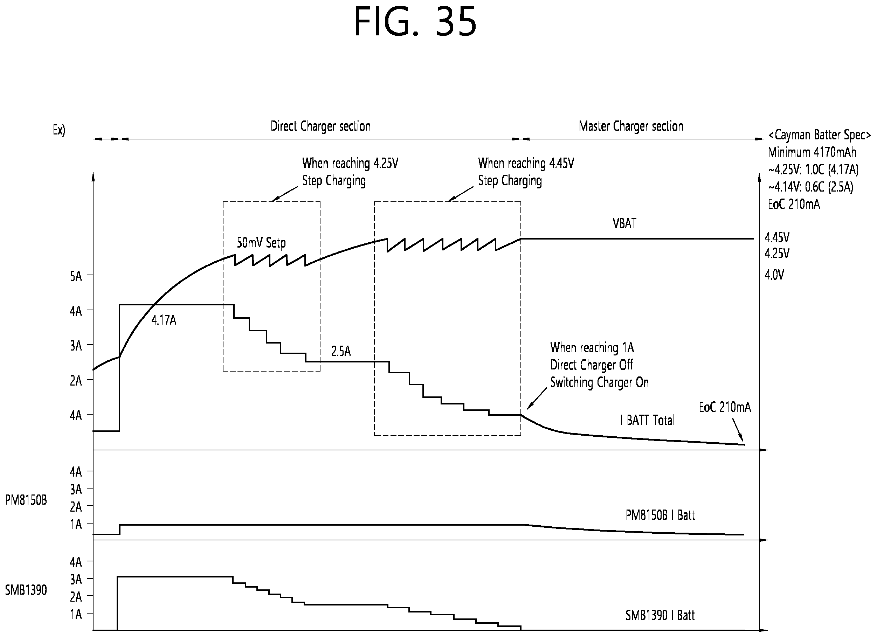

FIG. 35 is a diagram showing a Direct Charger section and a Master Charger section according to voltage and current.

The Charging Profile of FIG. 35 is designed based on the battery voltage, battery temperature, and surface temperature of PRx.

When the battery voltage/temperature/surface temperature reaches a specific temperature/voltage, the voltage is controlled.

The power profile can be designed by combining the input voltage/current of PTx (power input section) and PTx coil temperature (this information can be used as a new parameter for the existing power profile control).
-> Variable Frequency Type: Lower limit of operating frequency (e.g., if the operating frequency range of PTx is 110 - 190 kHz, the lower limit is 110 kHz information)
-> Fixed Frequency Type: Upper limit of variable voltage (e.g., if the variable voltage range of PTx is 1-13 V, the upper limit is 13 V information)
-> The wireless device can lower the power and control it when it reaches each lower limit of operating frequency/upper limit of variable voltage.

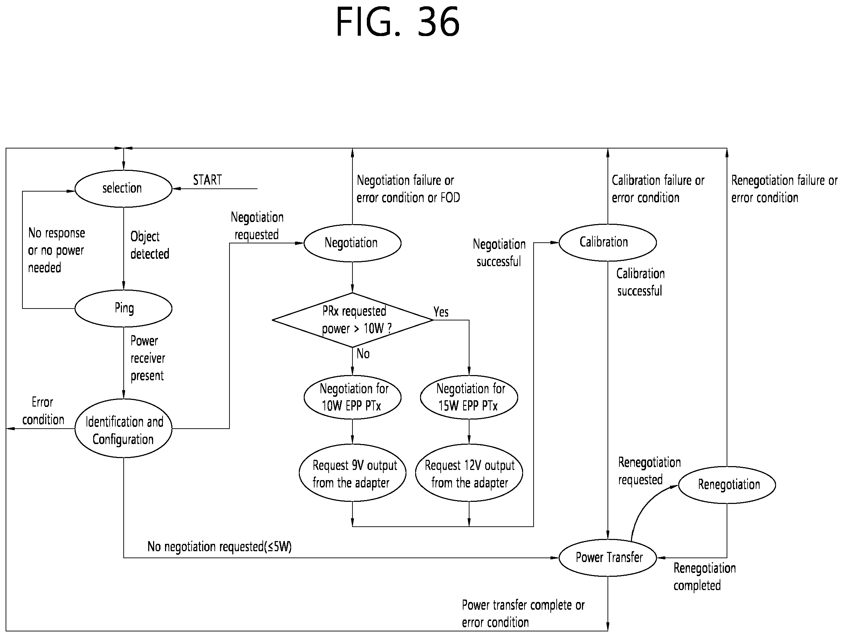

FIG. 36 shows an operation protocol according to EPP.

The operation protocol of FIG. 36 is performed as an EPP-based protocol, separate from the Power Profile described above.

The operation protocol of FIG. 36 includes the Selection, Ping, Identification and Configuration, Negotiation, Calibration, Power Transfer, and Renegotiation phases. The specific operations for each phase are illustrated in FIG. 36.

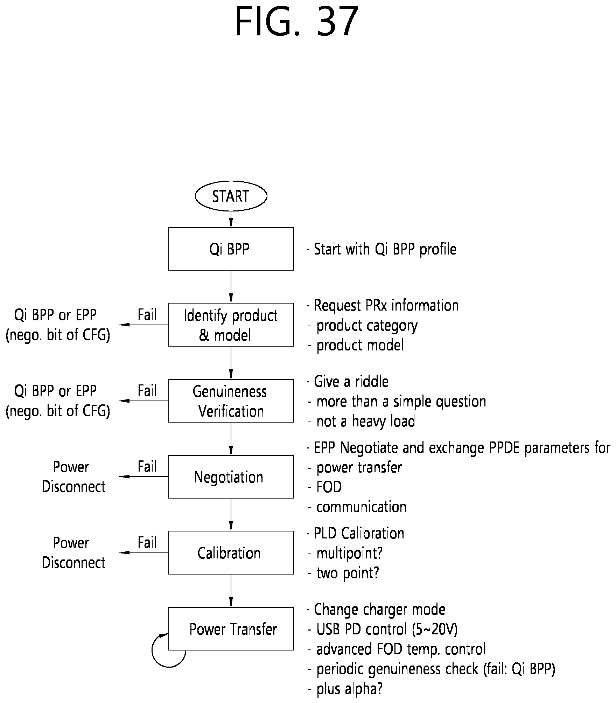

FIG. 37 shows a Power Profile according to the present embodiment.

The operation protocol of FIG. 37 proposes a new profile for fast charging.

The operation protocol of FIG. 37 includes Qi BPP, Identify product & model, Genuineness Verification, Negotiation, Calibration, and Power Transfer phases.

First, the wireless device can start with the Qi BPP profile and enter the Identify product & model and Genuineness Verification phases. The wireless device can determine the product category and product model based on the PRx information requested in the Identify product & model phase. If the entry into the Identify product & model and Genuineness Verification phase fails, it proceeds to the Qi BPP or EPP mode (not the Fast Charging Profile).

The Genuineness Verification phase is a phase that directly borrows Qi, and can operate in the same way as Qi by authenticating the genuine product during the charging phase.

After that, the wireless device can enter the Negotiation and Calibration phases. If the entry into the Negotiation and Calibration phases fails, the power is cut off and the profile is no longer operated.

The following embodiments specifically describe the operations in the Identify product & model, Negotiation, and Power Transfer phases in the new profile for the fast charging.

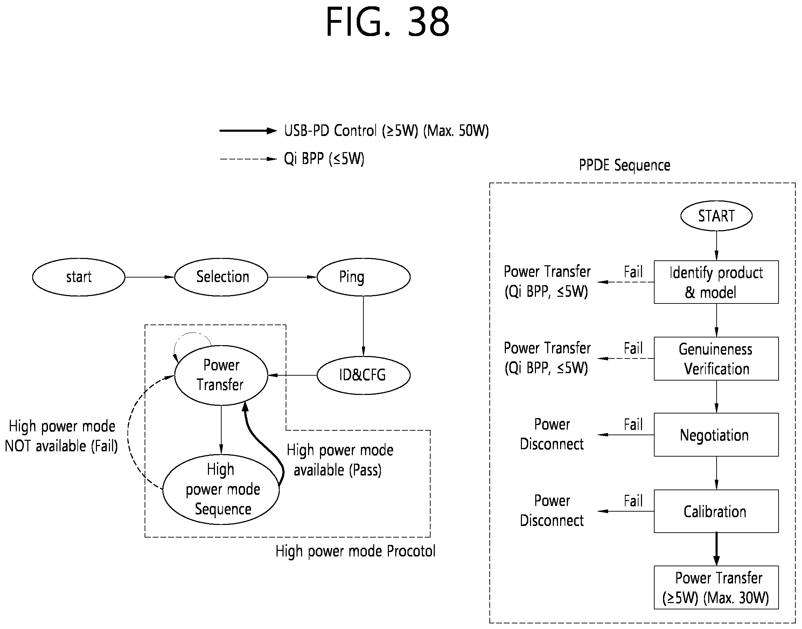

FIG. 38 shows an example of a Power Profile for fast charging.

Referring to FIG. 38, the High power mode protocol includes an operation to check the High Power mode Sequence in the Power Transfer phase.

If the High power mode is not available (fail) through the High Power mode Sequence, it proceeds to Qi BPP or EPP. This can be confirmed in the Identify product & model and Genuineness Verification phases in the PPDE Sequence.

If the High power mode is available (pass) through the High Power mode Sequence, it can proceed to the high power mode through the USB-PD control. This can be confirmed in the Negotiation and Calibration phases after the Identify product & model and Genuineness Verification phases.

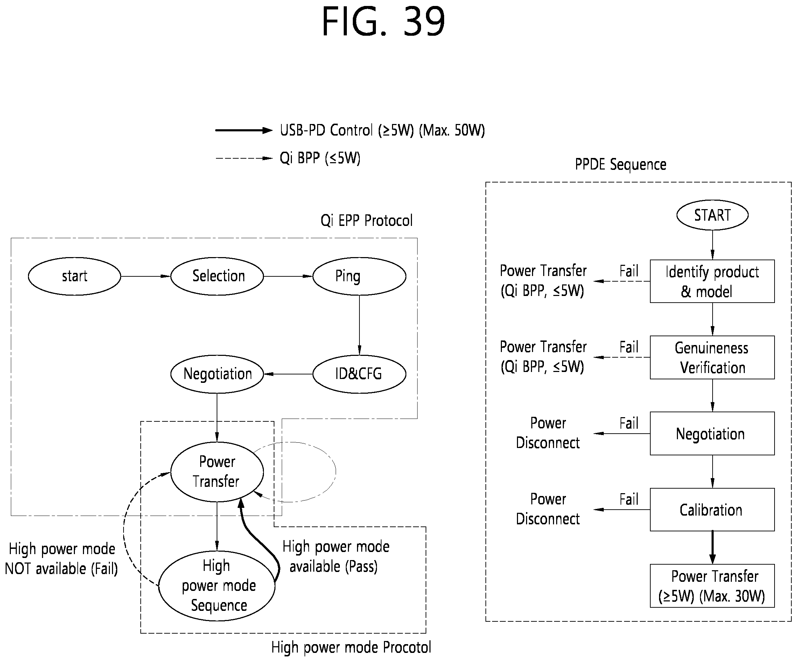

FIG. 39 shows another example of a Power Profile for fast charging.

The Power Profile of Fig. 39 differs from the Power Profile of Fig. 38 in that it performs additional Negotiation before entering the High power mode protocol.

Referring to Fig. 39, the High power mode protocol includes an operation to check the High Power mode Sequence in the Power Transfer phase.

If the High power mode is not available through the High Power mode Sequence (fail), it proceeds to Qi BPP or EPP. This can be confirmed in the Identify product & model and Genuineness Verification phases of the PPDE Sequence.

If the High power mode is available through the High Power mode Sequence (pass), it can proceed to the High power mode through the USB-PD control. This can be confirmed in the Negotiation and Calibration phases after the Identify product & model and Genuineness Verification phases.

This embodiment proposes a method for power control and power transmission by a wireless power transmitter or wireless charger (PTx).

Previously, when a PRx sends a Control Error (CE) packet, the PTx used to control the power. Previously, two pieces of information were transmitted, but as the amount of information that can be transmitted increases at high speeds, this embodiment proposes a method for the PTx to actively control the power (without a request from the PRx).

### Example #1 Setting the authority for power transmission and power control

The conventional power control was a method of controlling the strength of a magnetic field by changing the driving condition of the charging coil of the PTx in the power control command (CE data packet) of the PRx, thereby changing the voltage and power induced in the PRx. This embodiment proposes a method of adding a function capable of setting the above-described role.

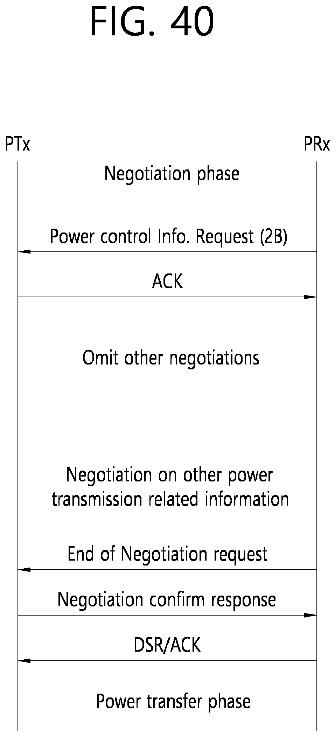

FIG. 40 shows an example of setting power transmission and power control authority to PTx or PRx.

Referring to Fig. 40, PRx/PTx enters the Negotiation phase. PRx/PTx can each set and transmit a packet regarding the Power control subject. That is, PRx can send a packet, or PTx can send a packet. The packet regarding the Power control subject can be called a Power control information request field.

For example, the Power control information request field can be configured as follows with 2 bytes. B0 of the Power control information request field indicates an Information header, and B1 indicates a power control main subject.

**[Table 2]**

| | b7 | b6 | b5 | b4 | b3 | b2 | b1 | b0 |
|---|---|---|---|---|---|---|---|---|
| B0 | Information header (ex 0x38) | | | | | | | |
| B1 | Power control main subject | | | | | | | |

PRx/PTx can transmit a Power control information request field with B0 set to 0x38 and B1 set to 0x02 for power control main subject setting. FIG. 40 only illustrates PRx transmitting the Power control information request field (not illustrated when PTx transmits it).

At this time, B0 being set to 0x38 indicates that it is an Information header for power control main subject setting, and B1 being set to 0x02 indicates that only PTx performs power control. When B1 is set to 0x01, it indicates that only PRx performs power control, and when B1 is set to 0x03, it indicates that both PTx and PRx are set as the subjects of power control (Dual mode).

PRx/PTx sends a response to the above Power control information request field (ACK/NAK/ND/ATN, Data Stream Response (DSR) packet series)

When PTx performs power transmission/control (B1 is 0x02), PTx obtains current battery-related information (current battery level, e.g. 55%, 1450mAh/4110mAh) and power transmission-related information (e.g. power transmission method, charging target time, charging target amount, power transmission voltage, etc.) from PRx.

When the power transfer-related negotiation is completed, PRx/PTx enters the power transfer phase. The specific operation for the power transfer-related negotiation is described in Example #3 below.

### Example #2 Power Control/Power Transmission Method by PTx

This embodiment proposes a method in which PTx provides driving condition information for power control (providing PTx → PRx information) and adds a function to receive status information such as voltage induced in PRx and change the driving condition of PTx's charging coil (providing PRx → PTx information, changing PTx coil driving condition action).

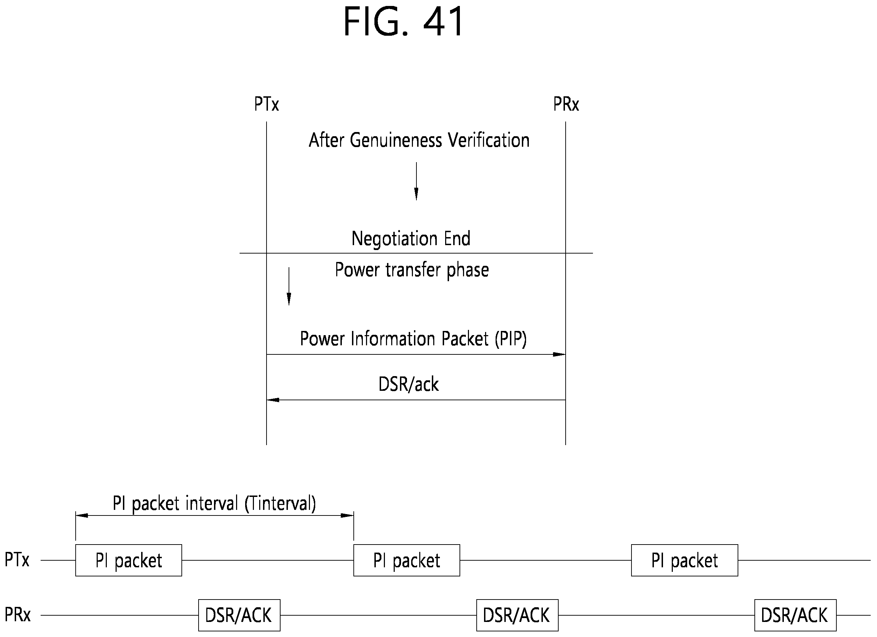

FIG. 41 shows an example of PTx performing power transmission and power control.

Referring to Fig. 41, PRx/PTx enters the power transfer phase. For power control, PTx transmits Power information packet (PIP) to PRx. (PIP is transmitted based on a certain interval like the existing Control Error Packet (CEP))

PRx receives PIP of PTx, and if the value is suitable, transmits DSR/ack. If the value is not suitable, PRx transmits DSR/nak. For example, if PTx is transmitting 15W, 9v, B0 of PIP is set to 0x0F and B1 is set to 0x5A and transmitted. The above PIP can be configured as follows with 2 bytes.

**[Table 3]**

| | b7 | b6 | b5 | b4 | b3 | b2 | b1 | b0 |
|---|---|---|---|---|---|---|---|---|
| B0 | Current power transmission (15W = 0x0F) | | | | | | | |
| B1 | Current power control value (voltage for power control, frequency for frequency control) | | | | | | | |

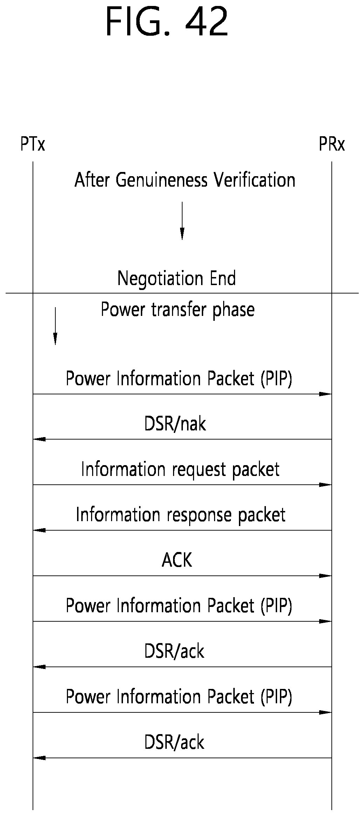

FIG. 42 shows an example of PTx performing power transmission and power control. Referring to FIG. 42, if PRx is determined to be an inappropriate value for the PIP of PTx, PRx transmits DSR/nak.

PTx asks PRx for the reason for DSR/nak (transmits an Information request packet). PRx transmits an Information response packet to the Information request packet. PTx then responds with an ACK to PRx's response, and can then restart power transmission.

The information request packet transmitted by PTx can be composed of 2 bytes as follows. Example) PTx's information request packet (0x28, 0x88)

**[Table 4]**

| | b7 | b6 | b5 | b4 | b3 | b2 | b1 | b0 |
|---|---|---|---|---|---|---|---|---|
| B0 | PRx information header (ex 0x28) | | | | | | | |
| B1 | Request for DSR/NAK response reason for power information (ex. 0x88) | | | | | | | |

The Information response packet transmitted by the above PRx can be composed of 2 bytes as follows. Example) PRx is Information response packet (0x2A, 0x11)

**[Table 5]**

| | b7 | b6 | b5 | b4 | b3 | b2 | b1 | B0 |
|---|---|---|---|---|---|---|---|---|
| B0 | Power information response (ex 0x2A) | | | | | | | |
| B1 | Vrect is low (ex. 0x11) | | | | | | | |

Since the voltage value transmitted by PTx is low, the vrect value of PRx is low, so PRx transmits DSR/nak for PIP. PTx asks PRx for the reason through an Information request packet, and PRx responds with an Information response packet, thereby raising the PIP value and transmitting it.

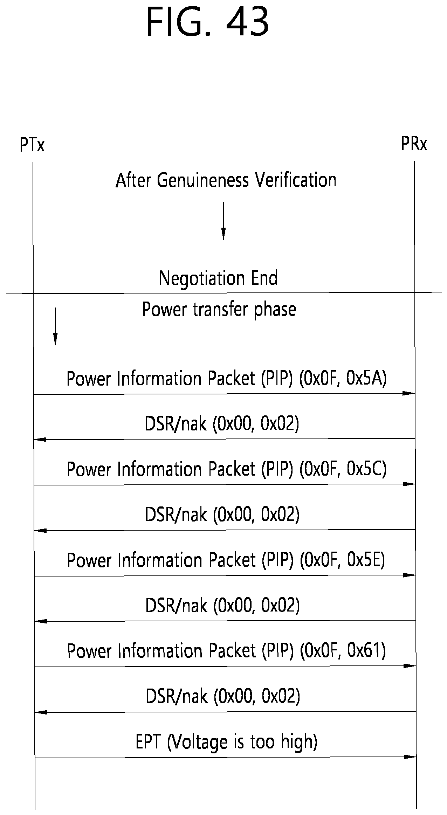

FIG. 43 shows an example of PTx performing power transmission and power control.

Referring to FIG. 43, if PRx is judged to be an inappropriate value for PIP of PTx, DSR/nak is transmitted.

The DSR/nak may be composed of 2 bytes as follows.

**[Table 6]**

| | b7 | b6 | b5 | b4 | b3 | b2 | b1 | b0 |
|---|---|---|---|---|---|---|---|---|
| B0 | 0x00 (DSR/nak) | | | | | | | |
| B1 | Reason (0x02 : Vrect is low) | | | | | | | |

Since the voltage value transmitted by PTx is low, the vrect value of PRx is low, so PRx transmits DSR/nak to PIP. The DSR/nak is transmitted as a packet that includes the reason for the nak. PTx controls the power transmission Hardware (H/W) or stops/restarts power transmission by looking at the reason for the DSR/nak.

For example, PRx can transmit DSR/nak to PIP because the power control value transmitted by PTx is low. PTx raises the power control value from 0x5A to 0x5C, 0x5E, and 0x61, but PRx can continue to transmit DSR/nak. If PTx can no longer raise the power control value, charging is stopped by End Power Transfer (EPT). Or, if the raised value (0x61) is at an appropriate level, PRx transmits DSR/ack to continue power transmission.

### Example #3 Method for Negotiating Power Control/Power Transmission Related Information

In addition, this specification proposes a method for negotiating information on HW control/Heat dissipation/HW information/Power control information for Fast charging (Max. 50W) in Qi.

This specification proposes a method for exchanging information on HW control/Heat dissipation/HW information/Power control information between each transmitter/receiver for fast charging. This has the effect of enabling stable fast charging entry through HW change of an actual fast charger.

In the existing negotiation phase, only requests/information on the maximum power transfer value were made. However, in this embodiment, power transfer negotiation based on rich information is possible through information exchange on various factors that greatly affect power transfer (e.g., coupling factor, z-distance, magnet presence, etc.).

This specification proposes the following contents.
- For Qi fast charging, PTx/PRx may request the following information in the Negotiation phase and must provide a response. After confirming the product manufacturer/model, PTx/PRx enters the Negotiation phase after going through the genuine function.

Each PRx/PTx may request the information required for fast charging through the information Request packet.

The information that PTx can request or respond to is as follows. PTx information request packet can consist of 1 byte, 2 bytes, or 3 bytes. PTx information response packet can consist of 1 byte, 2 bytes, or 3 bytes. That is, PTx information request/response packet can consist of as follows.

### 1) Max. power available: Maximum transmittable wireless charging power (ex. Max. 50W)

PTx information request can consist of as follows (2 bytes).

**[Table 7]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x01 | | | | | | | |

PTx information Response may be composed as follows (1 byte).

**[Table 8]**

| | b7 | b6 | b5 | b4 | b3 | b2 | b1 | b0 |
|---|---|---|---|---|---|---|---|---|
| B0 | The maximum power that PTx can transmit (e.g. 0x32 for Max. 50W) | | | | | | | |

### 2) Charger operating type: Wireless charging operating method (frequency variable/voltage variable/frequency fixed) PTx information request can be configured as follows (2 bytes).

**[Table 9]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x02 | | | | | | | |

PTx information Response can be composed as follows (1 byte).

**[Table 10]**

| | b7 | b6 | b5 | b4 | b3 | b2 | b1 | b0 |
|---|---|---|---|---|---|---|---|---|
| B0 | Charger operating type value | | | | | | | |

### Example) 0x01: Frequency variable / 0x02: Voltage variable / 0x03: Frequency fixed 3) Operating frequency range: In case of frequency variable type, operating frequency range is provided (ex. 110 kHz - 145 kHz)

PTx information request can be composed as follows (2 bytes).

**[Table 11]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x03 | | | | | | | |

PTx information Response can be composed as follows (2 bytes).

**[Table 12]**

| | b7 | b6 | b5 | b4 | b3 | b2 | b1 | b0 |
|---|---|---|---|---|---|---|---|---|
| B0 | Frequency Range low value (ex 110khz -> 0x6E) | | | | | | | |
| B1 | Frequency Range high value (ex 145khz -> 0x91) | | | | | | | |

### 4) Operating Vrail range: In case of variable voltage type, operating voltage range is provided (ex. 9V - 20V)

PTx information request can be configured as follows (2 bytes).

**[Table 13]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x04 | | | | | | | |

PTx information Response can be composed as follows (2 bytes).

**[Table 14]**

| | b7 | b6 | b5 | b4 | b3 | b2 | b1 | b0 |
|---|---|---|---|---|---|---|---|---|
| B0 | Vrail Range low value (ex 9V -> 0x09) | | | | | | | |
| B1 | Vrail Range high value(ex. 20V-> 0x14) | | | | | | | |

### 5) Charger coil type: Wireless charging coil type (Multi/Single/Magnet)

PTx information request can be configured as follows (2 bytes).

**[Table 15]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x04 | | | | | | | |

PTx information Response can be composed as follows (2 bytes).

**[Table 16]**

| | b7 | b6 | b5 | b4 | b3 | b2 | b1 | B0 |
|---|---|---|---|---|---|---|---|---|
| B0 | Charger coil type | | | | | | | |
| B1 | In case of multi-coil, the number of multi-coils / in case of single-coil, the presence or absence of a magnet | | | | | | | |

### 6) Coil alignment information: (coupling co-efficient K value / Coil to Coil Z distance / Distance X,Y between Coil Centers) PTx information request can be structured as follows (2 bytes).

**[Table 17]**

| | b7 | b6 | b5 | b4 | b3 | b2 | b1 | B0 |
|---|---|---|---|---|---|---|---|---|
| B0 | PTx information header (ex 0x29) | | | | | | | |
| B1 | Ex) Request with specific Header of 0x06 | | | | | | | |

PTx information Response can be composed as follows (3 bytes).

**[Table 18]**

| | b7 | b6 | b5 | b4 | b3 | b2 | b1 | B0 |
|---|---|---|---|---|---|---|---|---|
| B0 | coupling co-efficient K value (ex. 0x51, 0.81) | | | | | | | |
| B1 | Coil to Coil Z distance (ex. 0x02, 2mm) | | | | | | | |
| B2 | Distance X between Coil Centers | | | | Distance Y between Coil Centers | | | |

### 7) Foreign Object presence probability: FO (Foreign Object) existence probability information PTx information request can be composed as follows (2 bytes).

**[Table 19]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x07 | | | | | | | |

PTx information Response can be composed as follows (1 byte).

**[Table 20]**

| | b7 | b6 | b5 | b4 | b3 | b2 | b1 | b0 |
|---|---|---|---|---|---|---|---|---|
| B0 | FO presence probability (higher the 0xff, higher the dangerous) | | | | | | | |

### 8) Operating Carrier Frequency: In the case of fixed frequency method, operating frequency information (ex. 127kHz)

PTx information request can be composed as follows (2 bytes).

**[Table 21]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x08 | | | | | | | |

PTx information Response can be composed as follows (1 byte).

**[Table 22]**

| | b7 | b6 | b5 | b4 | b3 | b2 | b1 | b0 |
|---|---|---|---|---|---|---|---|---|
| B0 | For fixed frequency chargers, the driving frequency (ex. 127khz -> 0x7E) | | | | | | | |

### 9) Cooling system information: Heat dissipation method and information (ex. 120mm F

### 9) Cooling system information: Heat dissipation method and information (ex. 120mm Fan, water cooling, 100mm Fan)

PTx information request can be composed as follows (2 bytes).

**[Table 23]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x07 | | | | | | | |

PTx information Response can be composed as follows (2 bytes).

**[Table 24]**

| | b7 | b6 | b5 | b4 | b3 | b2 | b1 | b0 |
|---|---|---|---|---|---|---|---|---|
| B0 | Cooling system type (air cooling -> 0x01, water cooling -> 0x02, other -> 0x03) | | | | | | | |
| B1 | Cooling system information (Fan size/fan sped/etc) | | | | | | | |

### 10) Reverse charging information: Whether reverse charging is supported

PTx information request can be composed as follows (2 bytes).

**[Table 25]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x10 | | | | | | | |

PTx information Response can be composed as follows (1 byte).

**[Table 26]**

| | b7 | b6 | b5 | b4 | b3 | b2 | b1 | b0 |
|---|---|---|---|---|---|---|---|---|
| B0 | Support (1: Supported/0: Not supported) | | | | Parameter (forced switching/power shortage/PTx request, etc.) | | | |

### 11) USB-PD: USB-PD support and version information

PTx information request can be composed as follows (2 bytes).

**[Table 27]**

| | b7 | b6 | b5 | b4 | b3 | b2 | b1 | b0 |
|---|---|---|---|---|---|---|---|---|
| B0 | PTx information header (ex 0x29) | | | | | | | |
| B1 | Ex) Request with specific Header of 0x11 | | | | | | | |

PTx information Response can be composed as follows (1 byte).

**[Table 28]**

| | b7 | b6 | b5 | b4 | b3 | b2 | b1 | b0 |
|---|---|---|---|---|---|---|---|---|
| B0 | Support (1: Supported/0: Not supported) | | | | USB-PD version information | | | |

The information that PRx can request or respond to is as follows. The PRx information request packet can consist of 1 byte, 2 bytes, or 3 bytes. The PRx information response packet can consist of 1 byte, 2 bytes, or 3 bytes. That is, the PRx information request/response packet can consist of the following:

### 1) Cap information: PRx capacitor value

The PRx information request can consist of the following (2 bytes).

**[Table 29]**

| | b7 | b6 | b5 | b4 | b3 | b2 | b1 | b0 |
|---|---|---|---|---|---|---|---|---|
| B0 | PRx information header (ex 0x28) | | | | | | | |
| B1 | Ex) Request with specific Header of 0x01 | | | | | | | |

The PRx information Response can be composed as follows (1 byte).

**[Table 30]**

| | b7 | b6 | b5 | b4 | b3 | b2 | b1 | b0 |
|---|---|---|---|---|---|---|---|---|
| B0 | PRx cap value (ex. 110nF -> 0x6E) | | | | | | | |

### 2) Reverse charging: PRx reverse charging support

PRx information request can be composed as follows (2 bytes).

**[Table 31]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x02 | | | | | | | |

The PRx information Response can be composed as follows (1 byte).

**[Table 32]**

| | b7 | b6 | b5 | b4 | b3 | b2 | b1 | b0 |
|---|---|---|---|---|---|---|---|---|
| B0 | Support (1: Supported/0: Not supported) | | | | Parameter (forced switching/power shortage/PTx request, etc.) | | | |

### 3) Battery Temperature

PRx information request can be composed as follows (2 bytes).

**[Table 33]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x03 | | | | | | | |

The PRx information Response can be composed as follows (1 byte).

**[Table 34]**

| | b7 | b6 | b5 | b4 | b3 | b2 | b1 | b0 |
|---|---|---|---|---|---|---|---|---|
| B0 | PRx Battery temperature (ex. 40 degrees -> 0x28) | | | | | | | |

### 4) Surface Temperature

PRx information request can be structured as follows (2 bytes).

**[Table 35]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x04 | | | | | | | |

The PRx information Response can be composed as follows (1 byte).

**[Table 36]**

| | b7 | b6 | b5 | b4 | b3 | b2 | b1 | b0 |
|---|---|---|---|---|---|---|---|---|
| B0 | PRx Surface temperature (ex. 40 degrees -> 0x28) | | | | | | | |

### 5) System Temperature

PRx information request can be composed as follows (2 bytes).

**[Table 37]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x05 | | | | | | | |

The PRx information Response can be composed as follows (1 byte).

**[Table 38]**

| | b7 | b6 | b5 | b4 | b3 | b2 | b1 | b0 |
|---|---|---|---|---|---|---|---|---|
| B0 | PRx System temperature (ex. 40 degrees -> 0x28) | | | | | | | |

### 6) Power charging request (Charging requirement)

PRx information request can be composed as follows (2 bytes).

**[Table 39]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x06 | | | | | | | |

The PRx information Response can be composed as follows (2 bytes).

**[Table 40]**

| | b7 | b6 | b5 | b4 | b3 | b2 | b1 | b0 |
|---|---|---|---|---|---|---|---|---|
| B0 | Current Battery value (ex. 56% -> 0x38) | | | | | | | |
| B1 | Charging Battery value (ex. 44% -> 0x2C) | | | | | | | |

### 7) Coil alignment information: (coupling co-efficient K value / Coil to Coil Z distance / Coil Center to Coil Distance X,Y)

PRx information request can be composed as follows (2 bytes).

**[Table 41]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x07 | | | | | | | |

The PRx information Response can be composed as follows (3 bytes).

**[Table 42]**

| | b7 | b6 | b5 | b4 | b3 | b2 | b1 | b0 |
|---|---|---|---|---|---|---|---|---|
| B0 | coupling co-efficient K value (ex. 0x51, 0.81) | | | | | | | |
| B1 | Coil to Coil Z distance (ex. 0x02, 2mm) | | | | | | | |
| B2 | Distance X between Coil Centers | | | | Distance Y between Coil Centers | | | |

### 8) Charger coil type: Wireless charging coil type (Multi/Single/Magnet)

PRx information request can be configured as follows (2 bytes).

**[Table 43]**

| | b7 | b6 | b5 | b4 | b3 | b2 | b1 | b0 |
|---|---|---|---|---|---|---|---|---|
| B0 | PRx information header (ex 0x29) | | | | | | | |
| B1 | Ex) Request with specific Header of 0x08 | | | | | | | |

The PRx information Response can be composed as follows (2 bytes).

**[Table 44]**

| | b7 | b6 | b5 | b4 | b3 | b2 | b1 | b0 |
|---|---|---|---|---|---|---|---|---|
| B0 | Charger coil type | | | | | | | |
| B1 | In case of multi-coil, the number of multi-coils / in case of single-coil, the presence or absence of a magnet | | | | | | | |

### example) 0x01 : Multi-coil / 0x02 : Smgle-coil

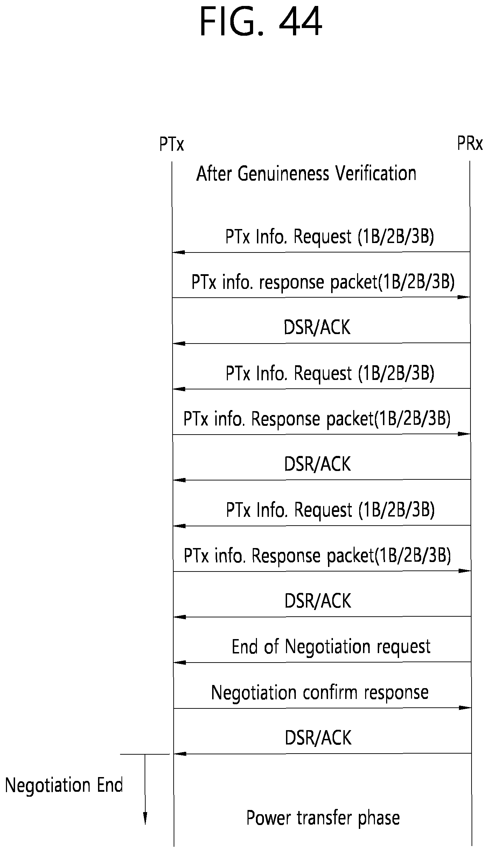

FIG. 44 shows an example of providing PTx information upon request of PRx.

Referring to FIG. 44, PRx/PTx performs genuineness verification after entering Fast charging mode. After genuineness verification is completed, PRx/PTx enters Negotiation. After entering Negotiation, PRx/PTx can request various information from each other's device.

PRx requests PTx info. Request for information of PTx. The PTx info. Request is divided into 1 byte/2 bytes/3 bytes respectively. PTx sends PTx info. response packet in response. The PTx info. response packet is divided into 1 byte/2 bytes/3 bytes respectively.

After performing the above method several times, PRx sends a Negotiation termination packet. PTx, which has been requested to terminate Negotiation, sends a confirm response packet. PRx sends DSR/ack in the response packet to terminate Negotiation. When Negotiation is terminated, PRx/PTx enters the Power transfer phase immediately.

The Negotiation end packet and the Negotiation confirm response packet may consist of 1 byte. For example, the Negotiation confirm response packet may request PTx Info, respond, and transmit the number of PTx Information finally responded to with DSR/ack. For example, if 7 PTx Information are requested and transmitted, the Negotiation confirm response packet may be transmitted with B0 set to 0x07.

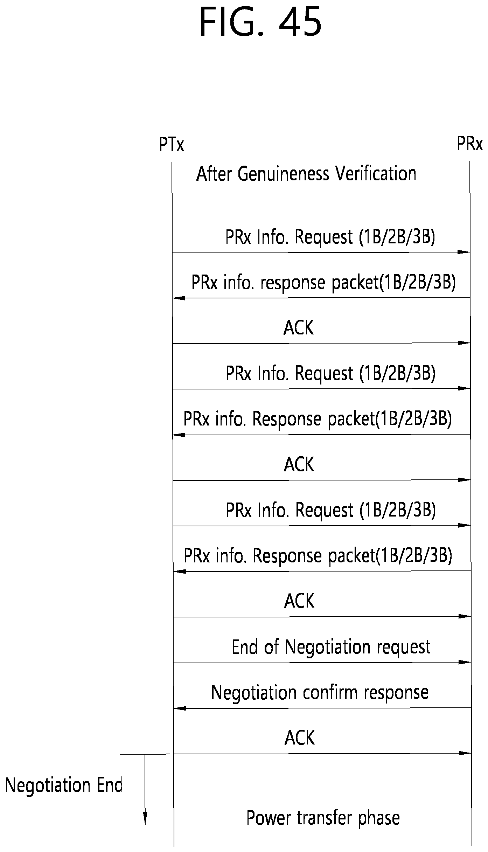

FIG. 45 shows an example of providing PRx information upon request of PTx.

Referring to Figure 45, PRx/PTx performs genuineness verification after entering Fast charging mode. After genuineness verification is completed, PRx/PTx enters Negotiation. After entering Negotiation, PRx/PTx can request various information from each other's device.

PTx requests PRx info. Request for information of PRx. The PRx info. Request is divided into 1 byte/2 bytes/3 bytes respectively. PRx sends PRx info. response packet in response. The PRx info. response packet is divided into 1 byte/2 bytes/3 bytes respectively.

After performing the above method several times, PTx sends a Negotiation termination packet. PRx, which is requested to terminate Negotiation, sends a confirm response packet. PRx sends an ACK to the response packet to terminate Negotiation. When Negotiation is terminated, PRx/PTx enters the Power transfer phase immediately.

The Negotiation end packet and the Negotiation confirm response packet may consist of 1 byte. For example, the Negotiation confirm response packet may request PRx Info, respond, and transmit the number of PRx Information finally responded to with DSR/ack. For example, if 7 PRx Information are requested and transmitted, the Negotiation confirm response packet may be transmitted with B0 set to 0x07.

Hereinafter, embodiments of the present specification will be described again from various subject perspectives.

The following drawings are created to illustrate specific examples of the present specification. The names of specific devices or names of specific signals/messages/fields described in the drawings are presented as examples, and therefore, the technical features of the present specification are not limited to the specific names used in the following drawings.

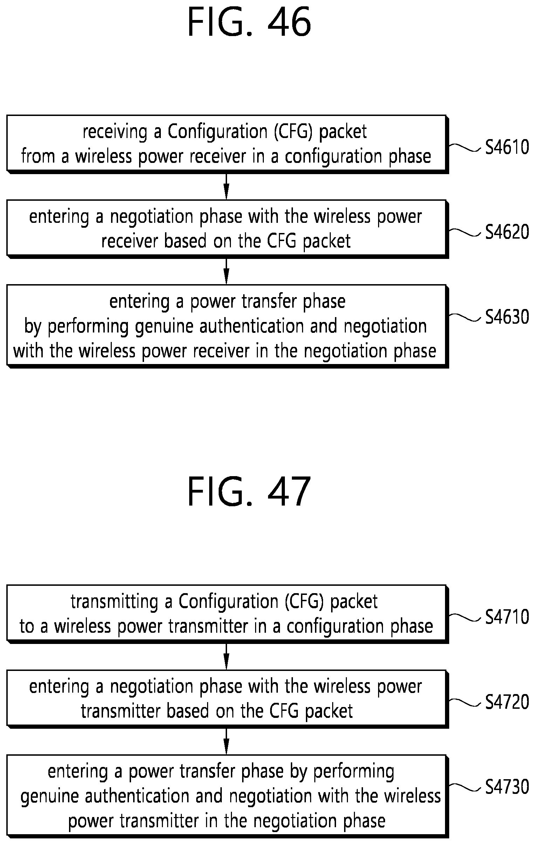

FIG. 46 is a flowchart of a method for performing power control for high-speed charging from a wireless power transmitter perspective according to an embodiment of the present specification.

According to FIG. 46, a wireless power transmitter receives a Configuration (CFG) packet from a wireless power receiver in a configuration phase (S4610).

The wireless power transmitter enters a negotiation phase with the wireless power receiver based on the CFG packet (S4620).

The wireless power transmitter enters a power transfer phase by performing genuine authentication and negotiation with the wireless power receiver in the negotiation phase (S4630).

In the power transfer phase, the power control method of the wireless power transmitter for fast charging is as follows.

The wireless power transmitter transmits a power information packet to the wireless power receiver. The wireless power transmitter receives a response message to the power information packet from the wireless power receiver.

The response message includes a Data Stream Response (DSR)/ Not Acknowledge (NAK) and a reason for the DSR/NAK based on power information of the wireless power transmitter not satisfying a required value. For example, if the power information packet includes a voltage value of the wireless power transmitter, the wireless power receiver determines whether a vrect value is appropriate for fast charging based on the voltage value of the wireless power transmitter, and if not, notifies the wireless power transmitter of DSR/NAK and the reason.

The reason for the DSR/NAK may include information on that a vrect value of the wireless power receiver is lower than the required value due to the voltage value of the wireless power transmitter.

The wireless power transmitter may perform power control based on the reason for the DSR/NAK. Since the wireless power transmitter has received the DSR/NAK and the reason for the DSR/NAK for the power information packet including the voltage value of the wireless power transmitter, the wireless power transmitter may perform power control to increase its voltage value as much as necessary for fast charging. Accordingly, the wireless power transmitter may increase the voltage value of the wireless power transmitter and retransmit the power information packet.

The power information packet may be retransmitted at specific time intervals until a DSR/ACK is received from the wireless power receiver. The specific time interval may be a preset interval during which the power information packet is transmitted.

The wireless power transmitter may transmit an End Power Transfer (EPT) packet to the wireless power receiver based on the wireless power transmitter no longer increasing the voltage value of the wireless power transmitter.

The wireless power transmitter may perform power transmission or wireless charging based on the increased voltage value of the wireless power transmitter based on the wireless power transmitter receiving the DSR/ACK from the wireless power receiver.

The genuine authentication and the negotiation between the wireless power transmitter and the wireless power receiver may be performed in a fast charging mode.

The following embodiment proposes a negotiation method for fast charging. First, a method in which the wireless power transmitter provides information and performs negotiation according to a request from the wireless power receiver is as follows.

In the negotiation phase, the wireless power transmitter may receive a request packet requesting information on the wireless power transmitter from the wireless power receiver. The wireless power transmitter may transmit a response packet responding with information on the wireless power transmitter to the wireless power receiver. The wireless power transmitter may receive a DSR/ACK for the response packet from the wireless power receiver. The wireless power transmitter may terminate the negotiation with the wireless power receiver after repeatedly transmitting and receiving the request packet, the response packet, and the DSR/ACK.

The information on the wireless power transmitter may include at least one of a maximum power of wireless charging that can be transmitted, a driving method of the wireless charging, a range of a driving frequency based on a frequency being variable, a range of a driving voltage based on a voltage being variable, a wireless charging coil method, information on coil alignment, information on a possibility of an existence of Foreign Object (FO), information on the driving frequency based on the frequency is fixed, information on a heat dissipation method, information on whether reverse charging is supported, and information on whether Universal Serial Bus-Power Deliver (USB-PD) is supported and a version.

As another example, a method in which the wireless power receiver performs negotiation by providing information at the request of the wireless power transmitter is as follows.

In the negotiation phase, the wireless power transmitter may transmit a request packet requesting information on the wireless power receiver to the wireless power receiver. The wireless power transmitter may receive a response packet responding with information on the wireless power receiver from the wireless power receiver. The wireless power transmitter may transmit an ACK for the response packet to the wireless power receiver. The wireless power transmitter may terminate the negotiation with the wireless power receiver after repeatedly transmitting and receiving the request packet, the response packet, and the ACK.

The information on the wireless power receiver may include at least one of a capacitor value of the wireless power receiver, information on whether the wireless power receiver supports reverse charging, a battery temperature, a surface temperature, a system temperature, a charging demand, information on coil alignment, and a wireless charging coil method.

In addition, the following embodiment proposes a method for setting an authority of power transmission and power control. In the negotiation phase, the wireless power transmitter may receive a packet for power control authority from the wireless power receiver. The wireless power transmitter may transmit an ACK in response to the packet for the power control authority to the wireless power receiver. The packet for the power control authority can include information on a subject (or an entity) performing the power control.

For example, the packet for the power control permission may be composed of first and second bytes. The first byte may be an information header for setting the power control authority, and the second byte may indicate an entity performing the power control.

For example, if the second byte is set to 0x01, the subject (or the entity) performing the power control may be the wireless power receiver. If the second byte is set to 0x02, the subject performing the power control may be the wireless power transmitter. If the second byte is set to 0x03, the subject performing the power control may be both the wireless power transmitter and the wireless power receiver (Dual mode).

That is, the present embodiment proposes a method for power control and power transmission by a wireless power transmitter during fast charging and normal charging. Accordingly, the wireless power transmitter may perform the power control after checking a status of the wireless power receiver before directly performing the power control and the power transmission. In the past, there was a limitation that the power of the wireless power receiver had to be received, but through this embodiment, there is an effect that stable power transmission or wireless charging is possible by checking the status of the wireless power receiver in the middle while the wireless power transmitter directly performs the power control. The fast charging means charging in a high power mode, and the high power mode can support a power of at least 15 W and at most 50 W.

FIG. 47 is a flowchart of a method for performing power control for high-speed charging from a wireless power receiver perspective according to an embodiment of the present specification.

According to FIG. 47, a wireless power receiver transmits a Configuration (CFG) packet to a wireless power transmitter in a configuration phase (S4710).

The wireless power receiver enters a negotiation phase with the wireless power transmitter based on the CFG packet (S4720).

The wireless power receiver enters a power transfer phase by performing genuine authentication and negotiation with the wireless power transmitter in the negotiation phase (S4730).

In the power transfer phase, the power control method of the wireless power transmitter for fast charging is as follows.

The wireless power receiver receives a power information packet from the wireless power transmitter. The wireless power receiver transmits a response message to the power information packet to the wireless power transmitter.

The response message includes a Data Stream Response (DSR)/ Not Acknowledge (NAK) and a reason for the DSR/NAK based on power information of the wireless power transmitter not satisfying a required value. For example, if the power information packet includes a voltage value of the wireless power transmitter, the wireless power receiver determines whether a vrect value is appropriate for fast charging based on the voltage value of the wireless power transmitter, and if not, notifies the wireless power transmitter of DSR/NAK and the reason.

The reason for the DSR/NAK may include information on that a vrect value of the wireless power receiver is lower than the required value due to the voltage value of the wireless power transmitter.

The wireless power transmitter may perform power control based on the reason for the DSR/NAK. Since the wireless power transmitter has received the DSR/NAK and the reason for the DSR/NAK for the power information packet including the voltage value of the wireless power transmitter, the wireless power transmitter may perform the power control to increase its voltage value as much as necessary for fast charging. Accordingly, the wireless power receiver may re-receive the power information packet with the voltage value of the wireless power transmitter increased.

The power information packet may be re-received at specific time intervals until a DSR/ACK is transmitted to the wireless power transmitter. The specific time interval may be a preset interval during which the power information packet is transmitted.

The wireless power receiver may receive an End Power Transfer (EPT) packet from the wireless power transmitter based on the wireless power transmitter no longer increasing the voltage value of the wireless power transmitter.

The wireless power receiver may perform power transmission or wireless charging based on the increased voltage value of the wireless power transmitter based on the wireless power receiver transmitting the DSR/ACK to the wireless power transmitter.

The genuine authentication and the negotiation between the wireless power transmitter and the wireless power receiver may be performed in a fast charging mode.

The following embodiment proposes a negotiation method for fast charging. First, a method in which the wireless power transmitter provides information and performs negotiation according to a request from the wireless power receiver is as follows.

In the negotiation phase, the wireless power receiver may transmit a request packet requesting information on the wireless power transmitter to the wireless power transmitter. The wireless power receiver may receive a response packet responding with information on the wireless power transmitter from the wireless power transmitter. The wireless power receiver may transmit a DSR/ACK for the response packet to the wireless power transmitter. The wireless power receiver may terminate the negotiation with the wireless power transmitter after repeatedly transmitting and receiving the request packet, the response packet, and the DSR/ACK.

The information on the wireless power transmitter may include at least one of a maximum power of wireless charging that can be transmitted, a driving method of the wireless charging, a range of a driving frequency based on a frequency being variable, a range of a driving voltage based on a voltage being variable, a wireless charging coil method, information on coil alignment, information on a possibility of an existence of Foreign Object (FO), information on the driving frequency based on the frequency is fixed, information on a heat dissipation method, information on whether reverse charging is supported, and information on whether Universal Serial Bus-Power Deliver (USB-PD) is supported and a version.

As another example, a method in which the wireless power receiver performs negotiation by providing information at the request of the wireless power transmitter is as follows.

In the negotiation phase, the wireless power receiver may receive a request packet requesting information on the wireless power receiver from the wireless power transmitter. The wireless power receiver may transmit a response packet responding with information on the wireless power receiver to the wireless power transmitter. The wireless power receiver may receive an ACK for the response packet from the wireless power transmitter. The wireless power receiver can terminate the negotiation with the wireless power transmitter after repeatedly transmitting and receiving the request packet, the response packet, and the ACK.

The information on the wireless power receiver may include at least one of a capacitor value of the wireless power receiver, information on whether the wireless power receiver supports reverse charging, a battery temperature, a surface temperature, a system temperature, a charging demand, information on coil alignment, and a wireless charging coil method.

In addition, the following embodiment proposes a method for setting an authority of power transmission and power control. In the negotiation phase, the wireless power receiver may transmit a packet for power control authority to the wireless power transmitter. The wireless power receiver may receive an ACK in response to the packet for the power control authority from the wireless power transmitter. The packet for the power control authority may include information on a subject (or an entity) performing the power control.

For example, the packet for the power control permission may be composed of first and second bytes. The first byte may be an information header for setting the power control authority, and the second byte may indicate an entity performing the power control.

For example, if the second byte is set to 0x01, the subject (or the entity) performing the power control may be the wireless power receiver. If the second byte is set to 0x02, the subject performing the power control may be the wireless power transmitter. If the second byte is set to 0x03, the subject performing the power control may be both the wireless power transmitter and the wireless power receiver (Dual mode).

That is, the present embodiment proposes a method for power control and power transmission by a wireless power transmitter during fast charging and normal charging. Accordingly, the wireless power transmitter may perform the power control after checking a status of the wireless power receiver before directly performing the power control and the power transmission. In the past, there was a limitation that the power of the wireless power receiver had to be received, but through this embodiment, there is an effect that stable power transmission or wireless charging is possible by checking the status of the wireless power receiver in the middle while the wireless power transmitter directly performs the power control. The fast charging means charging in a high power mode, and the high power mode can support a power of at least 15 W and at most 50 W.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

The claims set forth herein can be combined in a variety of ways. For example, the technical features of the method claims of this specification may be combined to be implemented as a device, and the technical features of the device claims of this specification may be combined to be implemented as a method. In addition, the technical features of the method claims of the present specification and the technical features of the device claims may be combined to be implemented as a device, and the technical features of the method claims of the present specification and the technical features of the device claims may be combined to be implemented as a method.

## Claims

1. A method for performing, by a wireless power transmitter, wireless charging in a wireless power transfer system, the method comprising:
receiving a Configuration (CFG) packet from a wireless power receiver in a configuration phase;
entering a negotiation phase with the wireless power receiver based on the CFG packet;
entering a power transfer phase by performing genuine authentication and negotiation with the wireless power receiver in the negotiation phase,
wherein in the power transfer phase,
transmitting a power information packet to the wireless power receiver;
receiving a response message to the power information packet from the wireless power receiver;
wherein the response message includes a Data Stream Response (DSR)/ Not Acknowledge (NAK) and a reason for the DSR/NAK based on power information of the wireless power transmitter not satisfying a required value, and
performing power control based on the reason for the DSR/NAK.

2. The method of claim 1, wherein based on the power information packet including a voltage value of the wireless power transmitter, the reason for the DSR/NAK include information on that a vrect value of the wireless power receiver is lower than the required value due to the voltage value of the wireless power transmitter,
further comprising:
increasing the voltage value of the wireless power transmitter and retransmitting the power information packet.

3. The method of claim 2, wherein the power information packet is retransmitted at specific time intervals until a DSR/ACK is received from the wireless power receiver,
further comprising:
transmitting an End Power Transfer (EPT) packet to the wireless power receiver based on the wireless power transmitter no longer increasing the voltage value of the wireless power transmitter.

4. The method of claim 3, wherein based on the wireless power transmitter receiving the DSR/ACK from the wireless power receiver, further comprising:
performing power transmission or wireless charging based on the increased voltage value of the wireless power transmitter.

5. The method of claim 1, wherein the genuine authentication and the negotiation between the wireless power transmitter and the wireless power receiver are performed in a fast charging mode,
wherein in the negotiation phase, further comprising:
receiving a request packet requesting information on the wireless power transmitter from the wireless power receiver;
transmitting a response packet responding with information on the wireless power transmitter to the wireless power receiver;
receiving a DSR/ACK for the response packet from the wireless power receiver; and
terminating the negotiation with the wireless power receiver after repeatedly transmitting and receiving the request packet, the response packet, and the DSR/ACK,
wherein the information on the wireless power transmitter includes at least one of a maximum power of wireless charging that can be transmitted, a driving method of the wireless charging, a range of a driving frequency based on a frequency being variable, a range of a driving voltage based on a voltage being variable, a wireless charging coil method, information on coil alignment, information on a possibility of an existence of Foreign Object (FO), information on the driving frequency based on the frequency is fixed, information on a heat dissipation method, information on whether reverse charging is supported, and information on whether Universal Serial Bus-Power Deliver (USB-PD) is supported and a version.

6. The method of claim 1, wherein the genuine authentication and the negotiation between the wireless power transmitter and the wireless power receiver are performed in a fast charging mode,
wherein in the negotiation phase, further comprising:
transmitting a request packet requesting information on the wireless power receiver to the wireless power receiver;
receiving a response packet responding to information on the wireless power receiver from the wireless power receiver;
transmitting an ACK for the response packet to the wireless power receiver; and
terminating the negotiation with the wireless power receiver after repeatedly transmitting and receiving the request packet, the response packet, and the ACK,
wherein the information on the wireless power receiver includes at least one of a capacitor value of the wireless power receiver, information on whether the wireless power receiver supports reverse charging, a battery temperature, a surface temperature, a system temperature, a charging demand, information on coil alignment, and a wireless charging coil method.

7. The method of claim 5, wherein in the negotiation phase, further comprising:
receiving a packet for power control authority from the wireless power receiver; and
transmitting an ACK in response to the packet for the power control authority to the wireless power receiver,
wherein the packet for the power control authority includes information on a subject performing the power control.

8. A wireless power transmitter in a wireless power transfer system, the wireless power transmitter comprising:
a converter associated with transmitting or receiving wireless power; and
a communication/controller associated with controlling the transmitting or receiving of the wireless power, wherein the communication/controller is configured to:
receive a Configuration (CFG) packet from a wireless power receiver in a configuration phase;
enter a negotiation phase with the wireless power receiver based on the CFG packet;
enter a power transfer phase by performing genuine authentication and negotiation with the wireless power receiver in the negotiation phase,
wherein in the power transfer phase,
transmit a power information packet to the wireless power receiver;
receive a response message to the power information packet from the wireless power receiver;
wherein the response message includes a Data Stream Response (DSR)/ Not Acknowledge (NAK) and a reason for the DSR/NAK based on power information of the wireless power transmitter not satisfying a required value, and
perform power control based on the reason for the DSR/NAK.

9. A method for performing, by a wireless power receiver, wireless charging in a wireless power transfer system, the method comprising:
transmitting a Configuration (CFG) packet to a wireless power transmitter in a configuration phase;
entering a negotiation phase with the wireless power transmitter based on the CFG packet;
entering a power transfer phase by performing genuine authentication and negotiation with the wireless power transmitter in the negotiation phase,
wherein in the power transfer phase,
receiving a power information packet from the wireless power transmitter;
transmitting a response message to the power information packet to the wireless power receiver;
wherein the response message includes a Data Stream Response (DSR)/ Not Acknowledge (NAK) and a reason for the DSR/NAK based on power information of the wireless power transmitter not satisfying a required value, and
performing power control based on the reason for the DSR/NAK.

10. The method of claim 9, wherein based on the power information packet including a voltage value of the wireless power transmitter, the reason for the DSR/NAK include information on that a vrect value of the wireless power receiver is lower than the required value due to the voltage value of the wireless power transmitter,
further comprising:
re-receiving the power information packet with the voltage value of the wireless power transmitter increased.

11. The method of claim 10, wherein the power information packet is re-received at specific time intervals until a DSR/ACK is transmitted to the wireless power transmitter,
further comprising:
receiving an End Power Transfer (EPT) packet from the wireless power transmitter based on the wireless power transmitter no longer increasing the voltage value of the wireless power transmitter.

12. The method of claim 11, wherein based on the wireless power receiver transmitting the DSR/ACK to the wireless power transmitter, further comprising:
performing power transmission or wireless charging based on the increased voltage value of the wireless power transmitter.

13. The method of claim 9, wherein the genuine authentication and the negotiation between the wireless power transmitter and the wireless power receiver are performed in a fast charging mode,
wherein in the negotiation phase, further comprising:
transmitting a request packet requesting information on the wireless power transmitter to the wireless power transmitter;
receiving a response packet responding with information on the wireless power transmitter from the wireless power transmitter;
transmitting a DSR/ACK for the response packet to the wireless power transmitter; and
terminating the negotiation with the wireless power transmitter after repeatedly transmitting and receiving the request packet, the response packet, and the DSR/ACK,
wherein the information on the wireless power transmitter includes at least one of a maximum power of wireless charging that can be transmitted, a driving method of the wireless charging, a range of a driving frequency based on a frequency being variable, a range of a driving voltage based on a voltage being variable, a wireless charging coil method, information on coil alignment, information on a possibility of an existence of Foreign Object (FO), information on the driving frequency based on the frequency is fixed, information on a heat dissipation method, information on whether reverse charging is supported, and information on whether Universal Serial Bus-Power Deliver (USB-PD) is supported and a version.

14. The method of claim 9, wherein the genuine authentication and the negotiation between the wireless power transmitter and the wireless power receiver are performed in a fast charging mode,
wherein in the negotiation phase, further comprising:
receiving a request packet requesting information on the wireless power receiver from the wireless power transmitter;
transmitting a response packet responding to information on the wireless power receiver to the wireless power transmitter;
receiving an ACK for the response packet from the wireless power transmitter; and
terminating the negotiation with the wireless power transmitter after repeatedly transmitting and receiving the request packet, the response packet, and the ACK,
wherein the information on the wireless power receiver includes at least one of a capacitor value of the wireless power receiver, information on whether the wireless power receiver supports reverse charging, a battery temperature, a surface temperature, a system temperature, a charging demand, information on coil alignment, and a wireless charging coil method.

15. The method of claim 13, wherein in the negotiation phase, further comprising:
transmitting a packet for power control authority to the wireless power transmitter; and
receiving an ACK in response to the packet for the power control authority from the wireless power transmitter,
wherein the packet for the power control authority includes information on a subject performing the power control.

16. A wireless power receiver in a wireless power transfer system, the wireless power receiver comprising:
a converter associated with transmitting or receiving wireless power; and
a communication/controller associated with controlling the transmitting or receiving of the wireless power, wherein the communication/controller is configured to:
transmit a Configuration (CFG) packet to a wireless power transmitter in a configuration phase;
enter a negotiation phase with the wireless power transmitter based on the CFG packet;
enter a power transfer phase by performing genuine authentication and negotiation with the wireless power transmitter in the negotiation phase,
wherein in the power transfer phase,
receive a power information packet from the wireless power transmitter;
transmit a response message to the power information packet to the wireless power receiver;
wherein the response message includes a Data Stream Response (DSR)/ Not Acknowledge (NAK) and a reason for the DSR/NAK based on power information of the wireless power transmitter not satisfying a required value, and
perform power control based on the reason for the DSR/NAK.
